(19) **Europäisches Patentamt**
**European Patent Office**
**Office européen des brevets**

(11) **EP 1 340 398 B1**

(12) **EUROPEAN PATENT SPECIFICATION**

(45) Date of publication and mention
of the grant of the patent:
**03.10.2007 Bulletin 2007/40**

(51) Int Cl.:
***H04Q 7/38*** (2006.01)

(21) Application number: **01270076.1**

(86) International application number:
**PCT/SE2001/002683**

(22) Date of filing: **04.12.2001**

(87) International publication number:
**WO 2002/047424 (13.06.2002 Gazette 2002/24)**

(54) **PRELIMINARY PERFORMANCE OF HANDOVER FUNCTIONS IN TELECOMMUNICATIONS SYSTEM**

VORBEREITENDE AUSFÜHRUNG VON WEITERREICHUNGSFUNKTIONEN IN EINEM TELEKOMMUNIKATIONSSYSTEM

PERFORMANCES PRELIMINAIRES DE FONCTIONS DE COMMUTATION DANS UN SYSTEME DE TELECOMMUNICATION

(84) Designated Contracting States:
**AT BE CH CY DE DK ES FI FR GB GR IE IT LI LU MC NL PT SE TR**

(30) Priority: **04.12.2000 US 250476 P**
**17.08.2001 US 931280**

(43) Date of publication of application:
**03.09.2003 Bulletin 2003/36**

(73) Proprietor: **TELEFONAKTIEBOLAGET LM ERICSSON (publ)**
**164 83 Stockholm (SE)**

(72) Inventors:
• **JOHANSSON, Staffan**
**S-974 55 Luleaa (SE)**
• **JANNOK, Daniel**
**S-972 34 Luleaa (SE)**
• **HANSSON, Stefan**
**S-973 32 Luleaa (SE)**
• **OHLSSON, Jonas**
**S-977 51 Luleaa (SE)**

(74) Representative: **Hägglund, Mats O.**
**Ericsson AB**
**Patent Unit Radio Networks**
**164 80 Stockholm (SE)**

(56) References cited:
**EP-A- 0 845 877        WO-A-01/41482**
**US-A- 5 408 517        US-A- 5 652 748**

**Description**

TECHNICAL FIELD OF THE INVENTION

The invention pertains to data communications systems, and particularly to diversity handover (e.g., soft handover) in a telecommunications system such as a wideband code division multiple access telecommunications system.

DESCRIPTION OF RELATED ART

In a typical cellular radio system, mobile stations (MS), also known as mobile user equipment units (UEs), communicate via a radio access network (RAN) to one or more core networks. The mobile stations (MSs)/user equipment units (UEs) can be mobile telephones ("cellular"telephones) and laptops with mobile termination, and thus can be, for example, portable, pocket, hand-held, computer-included, or car-mounted mobile devices which communicate voice and/or data with radio access network.

The radio access network (RAN) covers a geographical area which is divided into cell areas, with each cell area being served by a base station (also known in some networks as a"B-node"or"node-B"). A cell is a geographical area where radio coverage is provided by the radio base station equipment at a base station site. Each cell is identified by a unique identity, which is broadcast in the cell. The base stations communicate over the air interface (e.g., radio frequencies) with the mobile stations within range of the base stations. In the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks.

One example of a radio access network is the Universal Mobile Telecommunications (UMTS) Terrestrial Radio Access Network (UTRAN). The UTRAN is a third generation system which in some respects builds upon the radio access technology known as Global System for Mobile communications (GSM) developed in Europe. UTRAN is essentially a wideband code division multiple access (W-CDMA) system. An undertaking known as the Third Generation Partnership Project (3GPPP) has endeavored to evolve further UTRAN and GSM-based radio access network technologies.

As those skilled in the art appreciate, in W-CDMA technology a common frequency band allows simultaneous communication between a mobile station (MS) and plural base stations. Signals occupying the common frequency band are discriminated at the receiving station through spread spectrum CDMA waveform properties based on the use of a high speed, pseudo-noise (PN) code. These high speed PN codes are used to modulate signals transmitted from the base stations and the mobile stations (MSs). Transmitter stations using different PN codes (or a PN code offset in time) produce signals that can be separately demodulated at a receiving station. The high speed PN modulation also allows the receiving station to advantageously generate a received signal from a single transmitting station by combining several distinct propagation paths of the transmitted signal. In CDMA, therefore, a mobile station (MS) need not switch frequency when handoff of a connection is made from one cell to another. As a result, a destination cell can.support an additional leg of a connection to a mobile station (MS) at the same time the origination cell continues to service the original leg of the connection. Since the mobile station (MS) is always communicating through at least one cell during handover, there is no disruption to the call. Hence, the term "soft handover." In contrast to hard handover, soft handover is a "make-before-break" switching operation.

Suppose that a mobile station already has a leg of a connection established with a base station (the source base station) serving a cell (the source cell) in which the mobile station presently resides. Either periodically or as triggered by certain events, the mobile station measures and reports to a control node (e.g., a radio network controller [RNC]) the received signal strength of preselected transmissions (e.g., pilot signals) from various base stations. In the W-CDMA context, a measurement report sent from the mobile station to the control node includes signal strength measurements for cells (e.g., base stations) already in an "active set" (cells for which diversity handover is already applicable), as well as other monitored cells. As the mobile station travels toward a destination cell (served by a destination base station) which is not in the active set, the mobile station eventually hears the pilot signal from the destination base station, and includes the destination base station in its measurement report to the control node. Eventually a decision must be made by the radio access network whether to add a new leg of the connection with the mobile station (the new leg involving the destination base station) by initiating a soft handover sequence at the destination base station.

Traditionally the radio access network determines to initiate a handover sequence at the destination base station in accordance with a soft handover algorithm. In the W-CDMA context, the soft handover algorithm has various events here of interest. A first event (Event 1A) is Radio Link Addition, which occurs when the measured and filtered pilot signal from the destination base station (not in the active set) exceeds a certain handover threshold. That certain handover threshold, herein also known as a Fixed Offset Threshold, is a fixed offset from the best (greatest strength) pilot signal in the active set (e.g., the source cell), as set forth in Expression 1. The fixed offset is a properly chosen constant. A low fixed offset means that a fixed offset threshold is high, and consequently a high signal strength is required to start handover. For a high fixed offset, the converse occurs. A description of how the fixed offset is chosen in provided in Third Generation Partnership Project Technical Specification 25.331.

$$\text{Expression 1: } \text{FixedOffsetThreshold} = \text{SignalQuality(Best Cell)} - \text{FixedOffset}$$

A second event (Event 1B) is Radio Link Removal, which occurs when the measured and filtered pilot signal from the destination base station falls below the threshold of Expression 1. For the events (such as Event 1A and Event 1B) to occur, typically the pilot signal must maintain its strength for a predetermined trigger time and a certain hysteresis value may be factored into the threshold expression. Moreover, for the Radio Link Addition event, the active set must not be full. A more detailed understanding of the W-CDMA soft handover algorithm, including other events and conditions, can be ascertained from *Radio Resource Management Strategies*, 3G TR 25.922, Ver. 0.5.0, September 1999, generated by the Third Generation Partnership Project, Technical Specification Group RAN, Working Group 2 (WG2).

The point where the handover sequence is started can be said to define the cell border between two cells. If the cell border is situated too far from the source base station, the mobile station might lose contact with the source base station before the handover is completed. In such a situation, the call is unfortunately dropped. Furthermore, to keep the signal quality at a reasonable level at the mobile station, the source base station and the mobile station have to increase the transmission power as the mobile station moves away from the source base station. Consequently, the interference in the current cell and to other neighboring cells increases, leading to lower system capacity. On the other hand, if the cell border is close to the source base station, but too far from the destination base station, the destination base station (instead of the source base station) has to start its transmission with a high output power.

With the conventional fixed offset threshold value of Expression 1, the point where a handover is started is essentially the same between the current cell and any of the cells not currently in the active set. Thus, there is no possibility of controlling when to start a handover between two specific cells, and many of the handovers may be started at non-optimal points.

The conventional handover sequence performed by the destination base station involves various activities, usually commencing with allocating resources, and then subsequently, e.g., activating a receiver at the destination base station to be associated with the mobile station, followed by L1 synchronization with the mobile station. However, some of these handover sequence activities, such as L1 synchronization, are considerably complex, process intensive, and time consuming. Such characteristics of these handover sequence activities militate against the overall network goal of efficiency, e.g., of avoiding delay (whether it be call setup delay, delay at channel switching, delay at handover, etc.). In fact, one common denominator and a major reason for delay in many traffic situations is the time required to perform Ll synchronization in different scenarios, including diversity handover.

Various prior art systems (such as the Ericsson CMS88 and CMS30 TDMA systems) have employed verification receivers which enable a target cell to verify the existence of a mobile station, by synchronizing the verification receiver to the mobile station. In essence, output from the verification receiver advises whether the mobile station can be detected in the receiving cell or not. In such systems, a positive verification result is a condition for proceeding with the handover sequence.

United States Patent 6,052,598 uses a series of received signal strength measurements of a mobile unit to extrapolate a time at which that mobile unit would have a handover in accordance with fixed offset thresholds, and affords an opportunity to allocate wireless resources for the mobile unit in anticipation of the extrapolated handover.

United States Patent 5,530,912 provides, within a cell, a handover region and a pre-handover zone relative to handover to an adjacent cell. When a mobile station is in the pre-handover zone, a free channel is reserved in the adjacent cell. The free channel in the adjacent cell is not granted until the mobile station moves into the handover region.

United States Patent 5,408,517 relates to a method for synchronizing a handoff and, more particularly, to a method of synchronizing a handoff between base stations having no direct communication. The communication system is able to synchronize a handoff of the communication unit between the source base station to the destination base station, wherein the source base station is the originating communication resource for the communication unit and the destination base station is the recipient communication resource for the communication unit subsequent to the handoff.

EP 0845877 relates to a mobile communication system and, more particularly, to personal communication services digital cellular communication system or similar mobile communication system using a code division multiple access scheme. A method of switching a communication channel when a mobile station moves from one service area to another service area is disclosed. The mobile station determines a difference between the transmission phase of a frame synchronizing signal received from a first base station currently holding a communication channel with the mobile station and the transmission phase of a frame synchronizing signal received from a second base station expected to newly set up a communication channel with the mobile station. The mobile station sends phase difference information representative of the above difference to the first base station via the communication channel. The first base station having received the phase difference information transfers the information to the second base station, causing it to correct the phase of data thereof to be sent to the mobile station. This successfully implements soft handover while guaranteeing the phase synchronization of frames sent from the two base stations.

WO 0141482 (prior art falling under Article 54(3) EPC) relate to a code division multiple access communication in cellular radio telephone communication systems, and more particularly, to diversity handover synchronization. In a diversity handover, a destination base station receiver rapidly synchronizes to a mobile station's uplink transmission by strategically locating the search window used by the destination base station multipath searcher. The search window is positioned in accordance with a propagation delay associated with the border of the destination base station cell area. if a known signal in the uplink transmission is not detected at the initial search window position, the search window is moved to positions progressively closer to the center of the cell area. The search window may be moved in various patterns in accordance with different search strategies.

What is needed, therefore, and an object of the present invention, is a technique for expediting time-intensive handover activities and thereby reducing diversity handover delay.

SUMMARY OF THE INVENTION

The present invention addresses the above-identified problems by providing a telecommunications system and a method for performing a handover in a telecommunications system that has a source base station and a destination base station where a specified mobile station establishes a connection with the source base station. Upon receipt of a first measurement report from the specified mobile station, at the destination base station a preliminary portion of a handover sequence for the specified mobile station is initiated. The preliminary portion of the handover sequence includes uplink radio synchronization with respect to the specified mobile station. Subsequently upon receipt of a second measurement report from the specified mobile station, at the destination base station another portion of the handover sequence for the specified mobile station at the destination base station is initiated.

Other objects and advantages of the method and apparatus will become apparent to those skilled in the art after reading the detailed description of the preferred embodiment.

The present invention provides a method for performing a handover in a telecommunications according to claim 1 and a telecommunications system according to claim 7.

BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1A, Fig. 1B, Fig. 1C, and Fig. ID are diagrammatic views showing various stages of movement of a mobile station through certain radio access network portions of a telecommunications system.

Fig. 2 is a graph showing a certain scenario of signal strength over time from a source base station and a destination base station.

Fig. 3 is a flowchart showing certain example steps performed by a dynamic offset threshold determination unit according to an embodiment of the invention.

Fig. 4 is a diagrammatic view showing how a dynamic offset threshold for a cell differs depending on direction of entry into the cell.

Fig. 5A is graph showing probability of handover as a function of a relationship between signal qualities of a source cell and a destination cell for mobile stations entering a destination cell from differing directions.

Fig. 5B is a graph showing a time difference for initiating the handover sequence, contrasting initiation of the handover sequence in accordance with a dynamic offset threshold and a fixed offset threshold.

Fig. 6 is diagrammatic view of example mobile communications system in which the present invention may be advantageously employed.

Fig. 7 is a simplified function block diagram of a portion of a UMTS Terrestrial Radio Access Network, including a mobile station (MS) station; a radio network controller; and a base station.

Fig. 8 is a schematic view of an example RNC node in accordance with one embodiment of the invention.

Fig. 9 is a schematic view of an example base station node in accordance with one embodiment of the invention.

Fig. 10 is a diagrammatic view illustrating a reporting mode of the present invention involving usage of periodic measurement reports for a short period of time, and event triggered measurement reports the rest of the time.

Fig. 11 is a graph showing cost of performing a soft handover at differing points in time.

Fig. 12 is a diagrammatic view reflecting initiation and various aspects of the preliminary portion of a handover sequence performed at a destination base station and an another portion of a handover sequence.

DETAILED DESCRIPTION

In the following description, for purposes of explanation and not limitation, specific details are set forth such as particular architectures, interfaces, techniques, etc. in order to provide a thorough understanding of the present invention. In other instances, detailed descriptions of well-known devices, circuits, and methods are omitted so as not to obscure the description of the present invention with unnecessary detail.

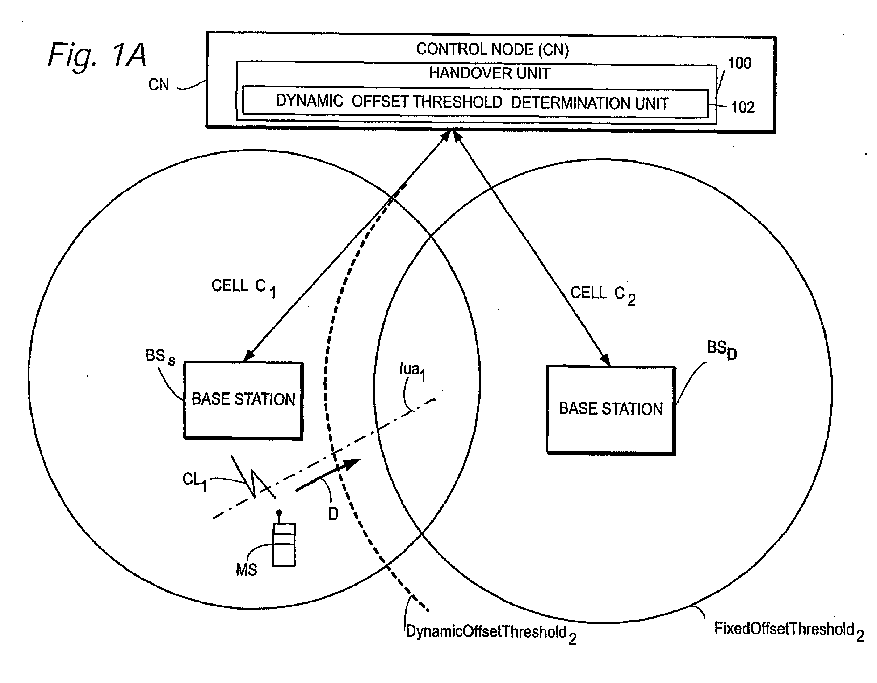

Fig. 1 A shows portions of a telecommunications system including a source base station $BS_S$, a destination base station $BS_D$, and a control node CN. The source base station $BS_S$ serves a cell Cl ; the destination base station $BS_D$ serves a cell $C_2$. The control node CN controls the source base station $BS_S$ and the destination base station $BS_D$. Control node N has a diversity handover unit 100 which governs the addition and removal of a leg to the connections controlled by control node N. In other words, the diversity handover unit 100 governs what cells (e. g., what base stations) are to be included in or deleted from the active set.

At the time shown in Fig. 1A, a mobile station (MS) has a call connection leg $CL_1$ over the air inter faceIual only with source base station $BS_S$. In Fig. 1A, mobile station (MS) is moving in the direction of arrow D, and has not yet reached a cell boundary of destination cell $C_2$. The cell boundary of destination cell $C_2$, depicted by line FixedOffsetThreshold$_2$ in Fig. 1A, is (as described above) related to the fixed offset threshold value of Expression 1, and thus represents the position at which (when crossed by a mobile station) conventional handover criteria is satisfied for the mobile station MS, and hence the position at which a conventional handover sequence would be begun for mobile station MS at destination base station $BS_D$.

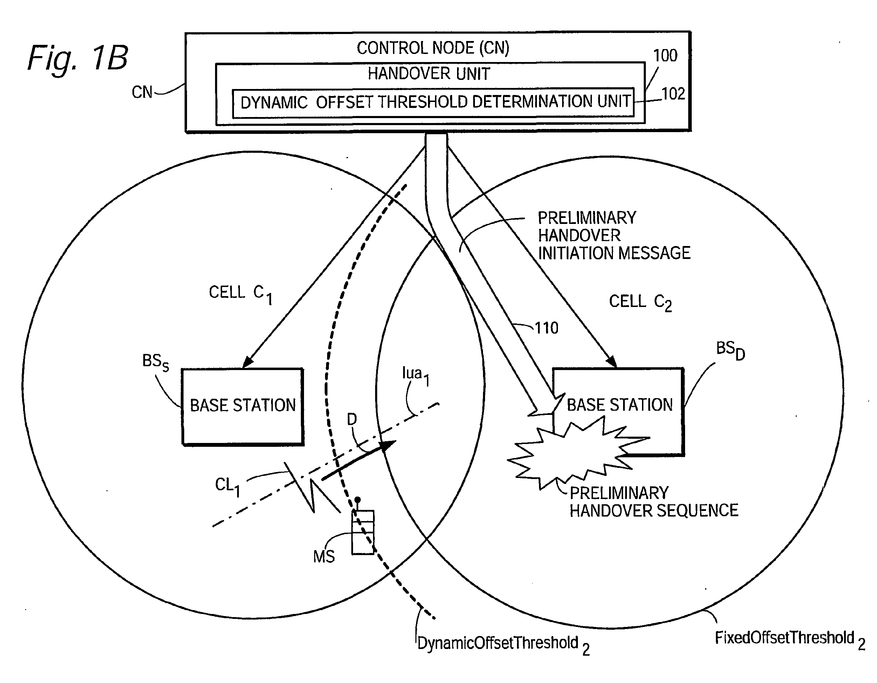

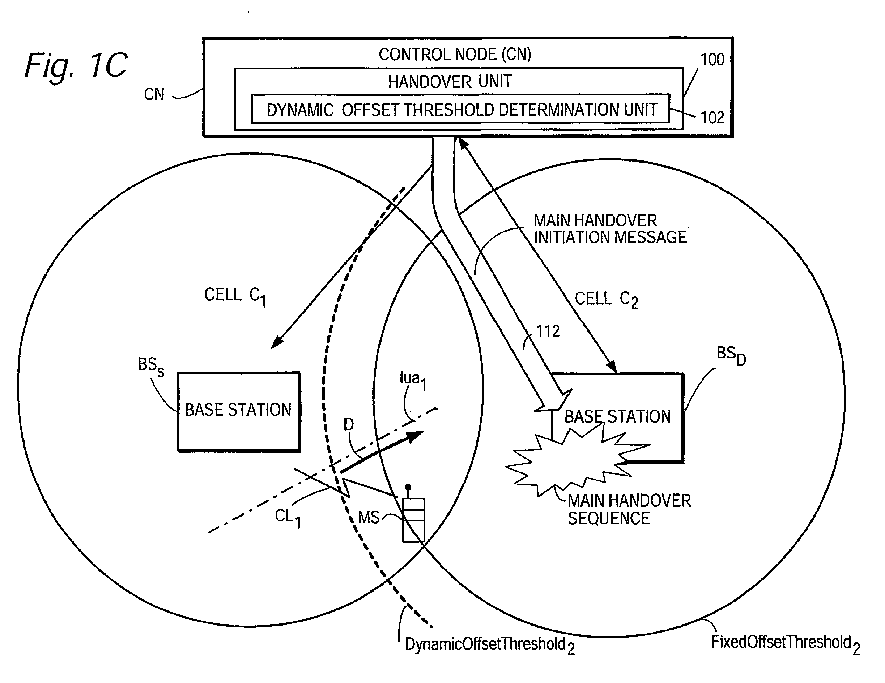

In accordance with the present invention, and as depicted in Fig. 1 B, a preliminary portion of a handover sequence at destination base station $BS_D$ involving the mobile station MS is begun before the mobile station MS reaches the line FixedOffsetThreshold$_2$. In fact, the preliminary portion of the handover sequence is begun when the mobile station MS reaches a position corresponding to the line DynamicOffsetThreshold$_2$ shown in Fig. 1 B. As explained subsequently, the preliminary portion of the handover sequence involves such activities as the destination base station $BS_D$ establishing a receiver for listening for mobile station MS and the destination base station $BS_D$ performing L1 uplink synchronization for mobile station MS. Should the mobile station MS continue in the direction of arrow D to cross the line FixedOffsetThreshold$_2$ as shown in Fig. 1C, a modified main handover sequence is performed at the destination base station $BS_D$ for the mobile station MS. The modified handover sequence includes one or more conventional handover sequence operations not already performed during the preliminary portion of the handover sequence (e.g., the remaining conventional handover sequence operations not already performed). Performance of the modified main handover sequence results in establishment of a second connection leg $CL_2$ with mobile station (MS), the second leg being through the destination base station $BS_D$ and over an air interface $Iua_2$.

As its very name implies, the line DynamicOffsetThreshold$_2$ is not statically positioned, but rather varies or shifts. Criteria and an expression for determining the position of the line DynamicOffsetThreshold$_2$ are subsequently provided.

The initiation of the preliminary portion of the handover sequence is triggered by a dynamic offset threshold determination unit 102 of the diversity handover unit 100. As explained below, the dynamic offset threshold used by the dynamic offset threshold determination unit 102 to initiate the preliminary portion of the handover sequence is based on a probability of that the mobile station (MS) will engage in a soft handover.

In an example, non-limiting embodiment of the invention, the dynamic offset threshold determination unit initiates the preliminary handover sequence when the signal strength of the destination base station as received at the specified mobile station is not less than a dynamic offset threshold. The dynamic offset threshold, reflected by line DynamicOffsetThreshold$_2$ in Fig. 1B, is a difference between the signal strength of the source base station as received at the specified mobile station and a dynamic offset, as shown in Expression 2.

$$\text{Expression 2: } DynamicOffset = FixedOffset + (K * Probability(Handover))$$

In Expression 2, K is a constant. The constant K of Expression 2 is used both to decide how significant the probability function will be for the total offset, and to map the probability to a suitable value.

The dynamic offset utilized in Expression 2 is, in turn, a function of the handover criteria and the probability of the specified mobile station fulfilling the handover criteria, as shown by Expression 3.

$$\text{Expression 3: } DynamicOffsetThreshold = SignalQuality(SourceCell) - DynamicOffset$$

In accordance with one mode of the invention, one way to decide the probability for handover is to let the handover probability to a destination cell be a function of the signal quality as measured from that destination cell, as expressed (for example) by Expression 4.

$$\text{Expression 4: } P(H(SQ(x))) = N_{max} / N_{SQ(x)}$$

In Expression 4, $P(H(SQ(x)))$ is the probability that reaching a certain Signal Quality (e.g., Signal Quality(x)) will result in a handover (H); $N_{max}$ is the number of users which have reached a maximum signal quality; and $N_{SQ(x)}$ is the number of users which have reached that certain Signal Quality (e.g., Signal Quality(x)). The maximum signal quality is the highest signal quality any users have measured from the destination cell (e.g., from the destination base station), and can be ascertained from previous measurement reports (e.g., from all users) regarding signal strength from the destination base station. Thus, by looking at the signal quality from the destination cell for a number of users, the system can tell how many of the users will reach a certain signal quality. The diversity handover unit 100 thus keeps track, and stores in a memory, the number of users which have reached a maximum signal quality ($N_{max}$) and the number of users which have reach each level of Signal Quality. With this information the dynamic offset threshold determination unit 102 can determine, at any signal quality level, how many users will reach an even higher signal quality level.

Thus, the diversity handover unit 100 can decide at which signal quality the mobile stations reach a crossroads. A crossroads is point, before a mobile station (MS) enters a cell, at which there is an equal probability that (1) the mobile station (MS) will undergo handover; and (2) the mobile station (MS) will not undergo handover. After the crossroad is passed, most of the users will continue toward the destination cell and eventually make a handover.

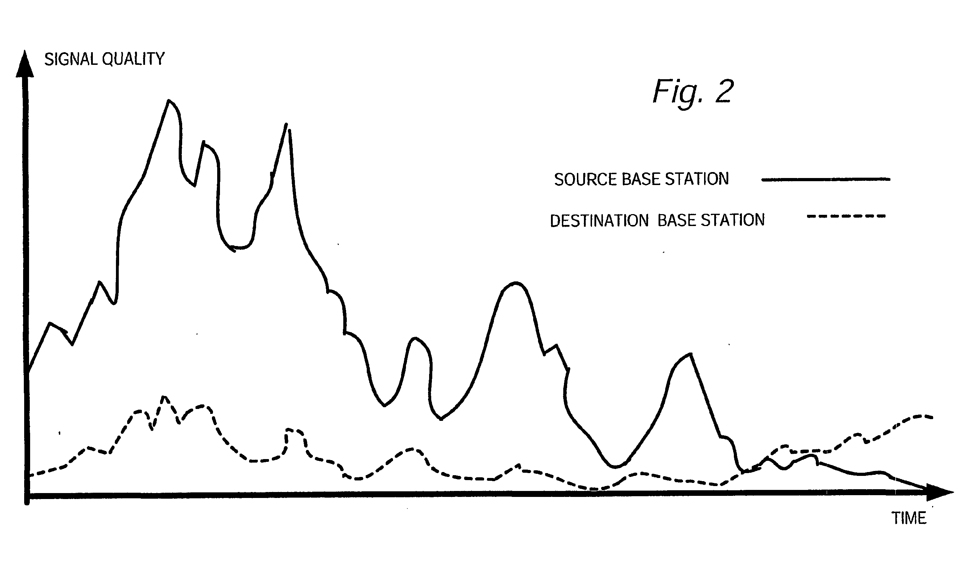

However, the signal quality from the destination cell as employed in the mode of Expression 4 may, in some instances, not be enough to decide adequately the probability for a handover. In a case where the mobile has good radio connections to both the source base station and destination base station before reaching the crossroad (for example on a large hill with line of sight to both base stations), the signal strength from the destination base station can be rather high. This high level can still be much lower than the signal quality of the source base station, and therefore no handover is started. In this regard, see Fig. 2, which is a graph of signal quality over time, showing an example scenario of the signal quality both from the source base station and the destination base station, and particularly showing the signal quality from the destination base station be rather high but still not triggering a soft handover. Later, at the point where the handover is eventually executed, the signal strength from the destination base station might be much lower, but still high enough, compared to the source base station, for the handover sequence to be started. In those cases the probability function will be useless, since all the users will reach the maximum signal quality level from the destination base station before the crossroad and the probability function will always yield one.

In view of the foregoing, a preferred mode for the probability function to depend on both the signal quality of the source base station and the signal quality of the destination base station. The relationship R between these two signal qualities can be defined by Expression 5.

$$\text{Expression 5: } R = (SignalQuality(DestinationCell)) / (SignalQuality(SourceCell))$$

The fact that the signal quality from the destination cell is high does not imply that the relationship is high. Thus, the problem found, when only looking at the signal quality from the destination cell, is solved. The relationship will increase as the measured signal quality from the destination cell gets higher, compared to the source cell. It will be enough to keep track of the relationship until the point where signal quality from the destination cell gets as good as the one from the source cell, i.e., the relationship is 1.

The probability of a handover to a destination cell in accordance with this second, preferred mode is thus shown by Expression 6.

$$\text{Expression 6: } P(H(R(x))) = N_{max} / NR(x)$$

In Expression 6, $P(H(R(x)))$ is the probability of a handover (H); $N_{max}$ is the number of users which reach a relationship R of 1; and $NR(x)$ is the number of users which have reached a certain relationship $R(x)$.

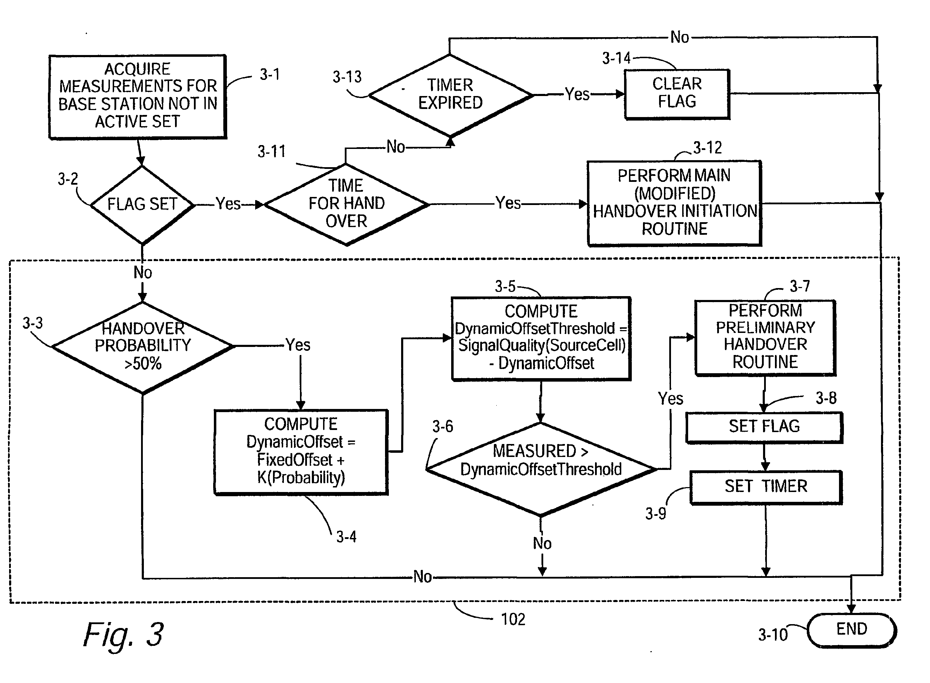

Fig. 3 shows certain example basic steps performed by diversity handover unit 100, including its dynamic offset threshold determination unit 102, according to an embodiment of the invention. Step 3-1 depicts the fact that diversity handover unit 100 acquires signal quality measurements for a base station not in the active set, e.g., for destination base station $BS_D$. Of course, the diversity handover unit 100 can, and likely does, receive signal quality measurements for base stations in the active set as well, but the thrust of the present activity is a determination whether to add a new base station to the active set, which means that the signal quality of the candidate base station must be obtained via the measurements. Some comments regarding the timing of reporting of signal quality measurements are provided subsequently.

At step 3-2 the diversity handover unit 100 checks whether a preliminary handover routine flag, simply known as the "flag", has been set. It will be assume initially that the preliminary handover routine flag has not been set, which leads to execution of step 3-3.

Step 3-3 is the first step of dynamic offset threshold determination unit 102, basic steps of dynamic offset threshold determination unit 102 being framed by broken line 102 in Fig. 3. At step 3-3, the dynamic offset threshold determination unit 102 checks if the handover probability is greater than a predetermined percentage (e.g., 50%, meaning that the mobile station (MS) has crossed over the crossroad). As indicated previously, the handover probability can be a function of signal strength of the destination base station (as explained above with reference to Expression 4). Alternatively, as another example, the handover probability can be both a function of signal strength of the destination base station and a function of signal strength of the source base station (as explained above with reference to Expression 5). In any event, as part of step 3-3 the dynamic offset threshold determination unit 102 checks the stored statistics relating to previous instances of mobile stations which have achieved the signal strength now measured by the mobile station (MS) for the pilot signal of the candidate base station, and determines on a predetermined basis (e.g., Expression 4 or Expression 5) the probability that a soft handover to the candidate base station will be preformed for the presently reporting mobile station (MS).

If the presently reporting mobile station (MS) does not have a handover probability greater than the predetermined percentage (e.g., 50%), execution of the dynamic offset threshold determination unit 102 ends as reflected by symbol step 3-10. On the other hand, if the presently reporting mobile station (MS) does have a handover probability greater than the predetermined percentage, step 3-4 through step 3-6, and possibly step 3-7 through step 3-9 as well, are performed by dynamic offset threshold determination unit 102.

Step 3-4 involves the dynamic offset threshold determination unit 102 computing the DynamicOffset of Expression 2. Then dynamic offset threshold determination unit 102 proceeds to compute the DynamicOffsetThreshold in accordance with Expression 3. Then, having computed the DynamicOffsetThreshold for the destination cell, at step 3-6 the dynamic offset threshold determination unit 102 determines whether the measured and filtered pilot signal received by the mobile station (MS) from destination base station $BS_D$ exceeds the DynamicOffsetThreshold. If the DynamicOffsetThreshold is exceeded, at step 3-7 the dynamic offset threshold determination unit 102 performs its preliminary handover routine.

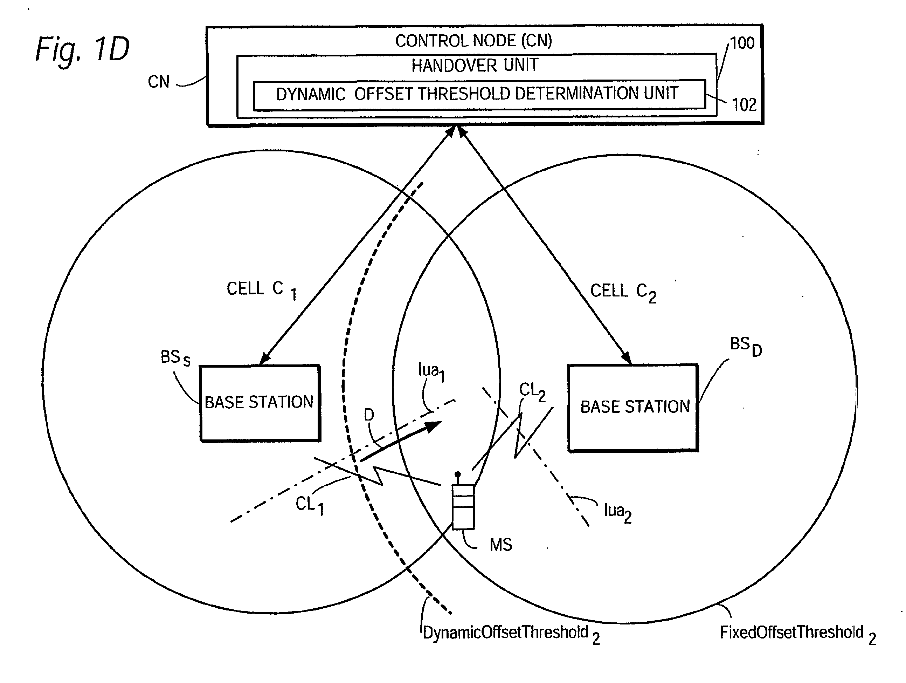

Performance at step 3-7 of the preliminary handover routine involves dynamic offset threshold determination unit 102 sending a preliminary handover initiation message 110 to the destination base station $BS_D$, as shown in Fig. 1. The preliminary handover initiation message 110 transmits to the destination base station $BS_D$ the information necessary for the destination base station $BS_D$ to perform its preliminary portion of the handover sequence for the mobile station (MS), and authorizes the destination base station $BS_D$ to initiate its preliminary portion of the handover sequence. The information necessary to the destination base station $BS_D$ for performing the preliminary portion of the handover sequence includes the scrambling code, as well as the identity of the mobile station (MS) [the scrambling code itself can serve as such an identity].

The information necessary for performing the preliminary portion of the handover sequence can be included in a modified Radio Link Setup message. The modified Radio Link Setup message includes a flag that tells the destination base station if it is the preliminary or remaining portion of the handover sequence that is to be executed.

After diversity handover unit 100 performs its preliminary handover routine, the pre-routine flag is set at step 3-8. After beginning its preliminary portion of the handover sequence, the destination base station $BS_D$ sets a timer to determine whether the mobile station (MS), having crossed the DynamicOffsetThreshold, crosses the FixedOffsetThreshold. If the timer set by the base station $BS_D$ expires, the destination base station $BS_D$ assumes that the mobile station (MS) turned back (changed direction to go away from rather than toward the destination base station $BS_D$) or terminated the call, and cancels out the steps taken in its preliminary portion of the handover sequence. Accordingly, to reflect this potential cancellation of the preliminary portion of the handover sequence by the destination base station $BS_D$, the dynamic offset threshold determination unit 102 sets a timer at step 3-9. After setting the timer, the dynamic offset threshold determination unit 102 can end its execution relative to this measurement report for the reporting mobile station (MS).

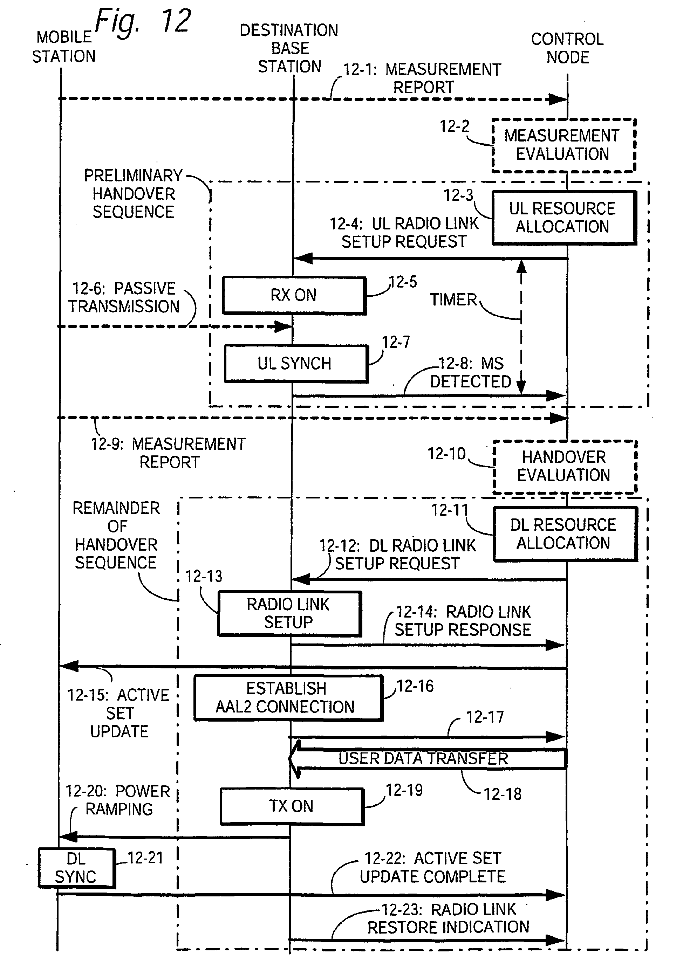

If, after receipt of the measurement report of step 3-1, the diversity handover unit 100 determines at step 3-2 that the preliminary handover routine flag has been set, step 3-11 is next performed. Step3-11 involves a determination whether the reporting mobile station (MS) has crossed the FixedOffsetThreshold, and is thus ready for the destination base station $BS_D$ to perform a modified handover sequence (e.g., the remaining aspects of the conventional handover sequence which were not included in the preliminary portion of the handover sequence). If the reporting mobile station has traveled to a point where it is appropriate for the destination base station $BS_D$ to execute the modified handover sequence, at step 3-12 the modified handover initiation routine is performed by diversity handover unit 100. Among the activities included in the modified handover initiation routine performed by diversity handover unit 100 is transmission of a handover initiation message to destination base station $BS_D$, as reflected by handover initiation message 112 shown in Fig. 1C. Upon receipt of the handover initiation message 112, the destination base station $BS_D$ performs its modified handover sequence. The information necessary to the destination base station $BS_D$ for performing the modified handover sequence includes the scrambling code for the mobile station and the identity of the mobile station (MS) as previously mentioned. Various aspects of the modified handover sequence are below discussed, e.g., with reference to Fig. 12.

If it is determined at step 3-11 that it is not yet time to perform the remainder of the handover sequence, a check is made at step 3-13 whether the timer (set at step 3-9) has expired. If the timer set at step 3-9 has expired, the dynamic offset threshold determination unit 102 realizes that the destination base station $BS_D$ now considers that the reporting mobile station (MS) has wandered away from a handover or hesitated inroute, and thus has cancelled steps taken in the preliminary portion of the handover sequence for the reporting mobile station (MS). Knowing therefore that the destination base station $BS_D$ has cancelled such preliminary portion of the handover sequence steps, the dynamic offset threshold determination unit 102 must again consider the preliminary portion of the handover sequence unpreformed for the reporting mobile, and therefore clears the preliminary handover routine flag at step 3-14. After clearing the flag at step 3-14, or after determining at step 3-13 that the timer has not expired, the dynamic offset threshold determination unit 102 concludes its processing with respect to the current measurement report (as depicted by the symbol of step 3-10).

The steps of Fig. 3 are thus executed as appropriate upon receipt of the signal quality measurement reports for the candidate base station. It should be understood, with respect to a given mobile station (MS), that the steps of Fig. 3 may be performed for more than one destination base station $BS_D$, as there may be several candidate destination base station $BS_D$ to which the mobile station is listening and for which connection legs may be added.

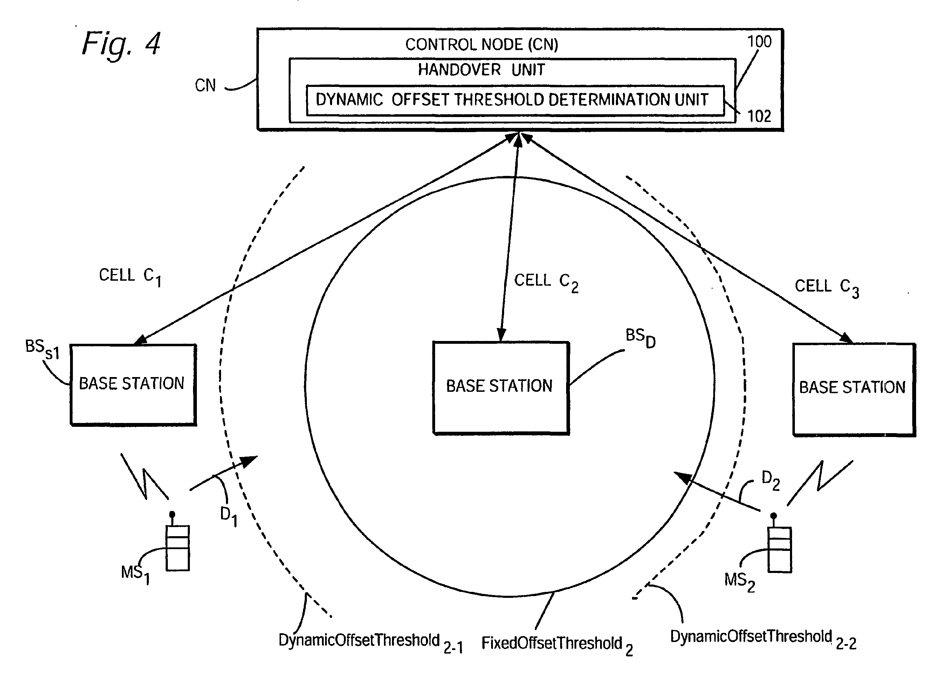

As evident from the foregoing, in accordance with the present invention the dynamic offset threshold determines the start of the handover process, particularly the start of the preliminary portion of the handover process. Interestingly, the dynamic offset threshold will differ between different pairs of cells. Depending on the probability that a handover from a source base station to a destination base station will take place, the dynamic offset threshold between two specific pairs of cells differs. To illustrate, Fig. 4 depicts a situation in which two mobile stations, $MS_1$ and $MS_2$, are moving from different cells $C_1$ and $C_3$ toward destination cell $BS_D$. The first mobile station ($MS_1$) has a first leg of connection with base station $BS_1$ which serves cell $C_1$, while a second mobile station ($MS_2$) has a first leg of connection with base station $BS_3$ which serves cell $C_3$. Both mobile stations $MS_1$ and $MS_2$ are moving toward destination cell $BS_D$ as represented by respective arrows $D_1$ and $D_2$, and accordingly towards a potential handover to destination cell $BS_D$. However, the line DynamicOffsetThreshold$_{2-1}$ for the mobile station ($MS_1$) coming from cell $C_1$ is situated differently than the line DynamicOffsetThreshold$_{2-2}$ for the mobile station ($MS_2$) coming from cell $C_3$. In other words, the line DynamicOffsetThreshold$_{2-1}$ for the mobile station ($MS_1$) coming from cell $C_1$ has a different (e.g., larger) radius than the line DynamicOffsetThreshold$_{2-2}$ for the mobile station ($MS_2$) coming from cell $C_3$. Thus, in accordance with the present invention, when approaching a destination cell (e.g., a destination base station) the DynamicOffsetThreshold can differ depending upon from which direction the destination cell is entered.

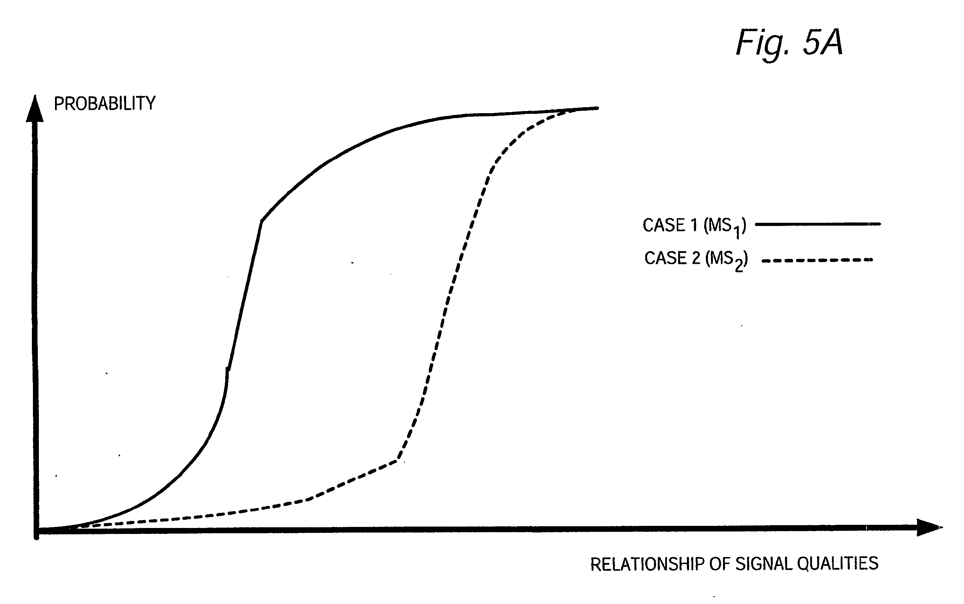

Thus, the probability functions utilized with respect to the two mobile stations $MS_1$ and $MS_2$ shown in Fig. 4 differ, and thus the position of the crossroads for each mobile station MS. See, for example, Fig. 5A, which graphically illustrates likely probability of handover for the two cases of the two mobile stations $MS_1$ and $MS_2$ as a function of a relationship between the signal qualities from the source base station and the destination base station. When the relationship between the signal qualities from the source base station and the base station increases, it is more probable that a handover will be made, and thus the difference between the FixedOffsetThreshold and the DynamicOffsetThreshold increases.

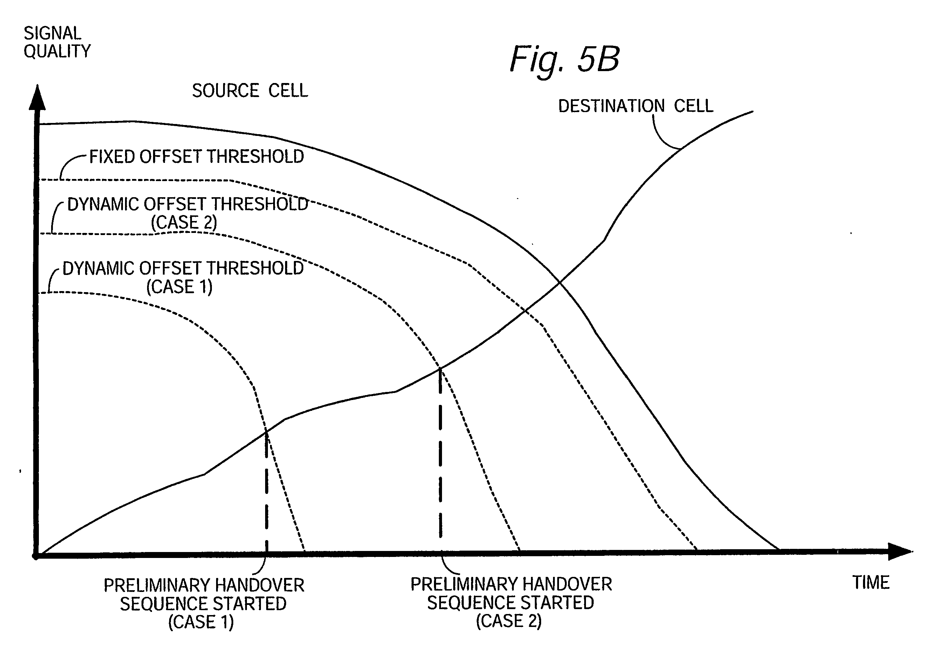

Fig. 5B contrasts a time difference for initiating the handover sequence in accordance with the respective thresholds represented by the dynamic offset threshold and the fixed offset threshold. Moreover, Fig. 5B illustrates the dynamic offset threshold both for case 1 of Fig. 4 (e.g., for mobile station ($MS_1$)) and for case 2 of Fig. 4 (e.g., for mobile station ($MS_2$)).

The preliminary portion of the handover sequence includes steps of starting a receiver for the mobile station (MS) at the destination base station $BS_D$ and performing L1 synchronization at the destination base station $BS_D$ for the mobile station (MS). Neither the starting of the receiver nor the synchronization operation cause any additional radio interference, but there is nevertheless a cost in pre-allocated hardware resources required for performing these tasks of the preliminary portion of the handover sequence. Therefore, it is important that the mobile station (MS) be close enough to the destination base station $BS_D$ when the preliminary portion of the handover sequence is started, so that the destination base station $BS_D$ is able to detect the mobile station (MS). Otherwise, hardware resources at the destination base station $BS_D$ are wasted in performing the preliminary portion of the handover sequence. The constant K of Expression 2 is chosen high enough to make certain that the preliminary portion of the handover sequence is not started too late, but low enough so that the handover will not be started too soon in accordance with these considerations.

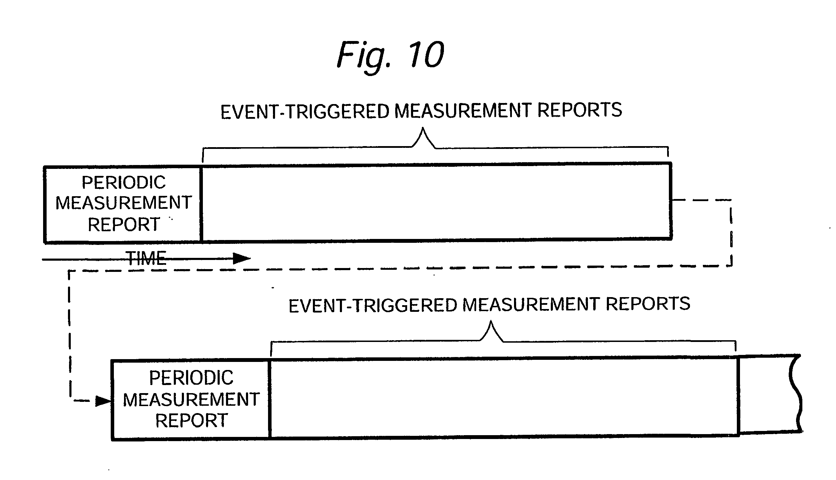

Reference was made above, for example in connection with step 3-1, that measurement reports regarding the signal quality of the destination base station $BS_D$ made by the mobile station (MS) were forwarded to the control node. Normally in W-CDMA, measurement reports are sent from the mobile station (MS) to the control node CN when some event is triggered, e.g., when the signal quality from the destination base station $BS_D$ gets above a certain threshold for handover. If event triggered measurement reports are used, an effort would have to be made to keep track of previous measured signal quality levels at the mobile station (MS), and to forward these records to the control node CN when the handover event is triggered. As an alternative, periodic measurement reports can also be sent from the mobile station (MS) to the control node CN. The periodic measurement reports involve more signaling. A variation is then to use only periodic measurements during a short period of time in order to collect the necessary statistics from a number of mobile stations (MSs), as illustrated in Fig. 10. After a while new statistics can be collected, using periodic measurements. In this way the probability function will adapt to the current traffic situation, but sill not utilize too much signaling. The fact that the method adapts to the current traffic situation is important, because the network operators do not have to configure the control nodes and base stations manually.

In an example deployment of the invention, the dynamic offset threshold determination unit is situated at a control node of the telecommunications system, such as a radio network control (RNC) node. The specified mobile station sends to the control node a measurement report of the signal strength of the destination base station as received at the specified mobile station, thereby enabling the dynamic offset threshold determination unit to makes its prediction.

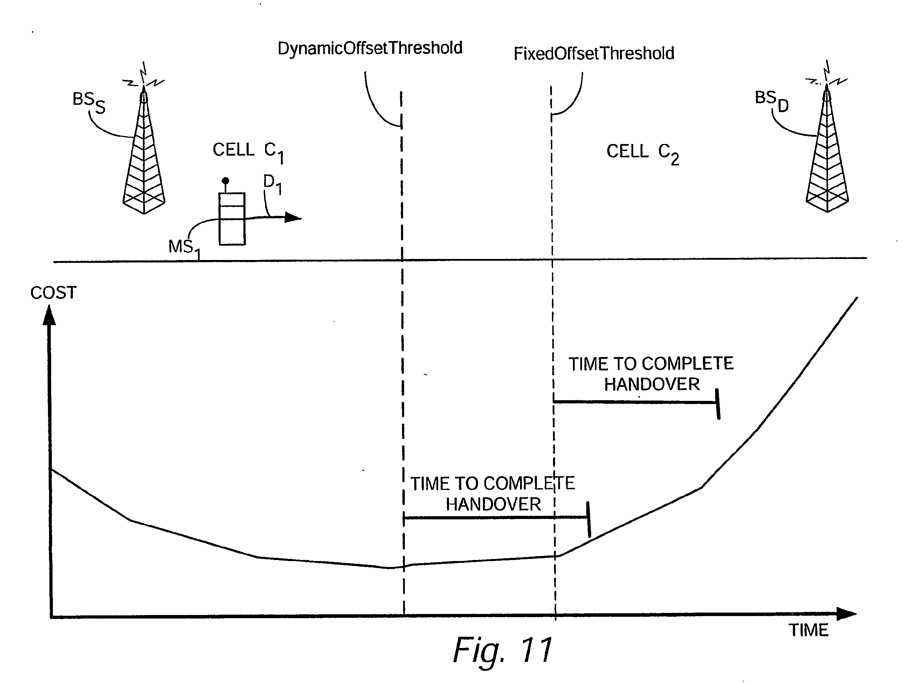

The invention allows a soft handover procedure to be executed at a point in time when the cost of execution is as low as possible, thereby leading to increased capacity in the network and lower risks for dropped calls at soft handover. The cost of execution can be expressed as a combination of utilized radio resources, utilized hardware resources, and the rate of dropped calls. Fig. 11 graphically illustrates such cost of execution as a function of the handover procedure being performed at different points in time. If the mobile station (MS) suddenly changes direction or terminates the call, the resources already set up for the mobile station (MS) will be wasted. To minimize the waste of resources in such event, the handover procedure can be divided into smaller consecutive parts, each triggered by its own threshold value. The user will then have more and more resources set up progressively as the probability for handover gets higher.

The present invention thus does not predict when a fixed-threshold handover for a mobile station will occur, but instead provides a dynamic offset threshold for starting soft handover. When the dynamic offset threshold for soft handover is exceeded, a preliminary portion of a handover sequence is initiated at the destination base station. The preliminary portion of the handover sequence is initiated so that a time-critical handover sequence activity (such as L1 uplink synchronization) is well underway, if not completed, by the time the soft handover is actually needed. The dynamic offset threshold for starting handover is based on a probability that the mobile station will engage in the handover. The probability is a statistical probability that handover will actually occur based on handover history of other mobile stations previously and similarly traveling and of the same signal strength.

Fig. 12, in conjunction with other figures such as Fig. 3, illustrates initiation and various aspects of the preliminary portion of the handover sequence and the remaining (another) portion of the handover sequence. In particular, Fig. 12 shows example basic actions which occur with respect to the mobile station (MS), the destination base station, and the control node, as well as certain signaling and other transmissions between these entities.

Action 12-1 of Fig. 12 is transmission of a measurement report from mobile station (MS) to the control node. The transmission of the measurement report occurs, of course, through a base station, such as the source base station or another base station in the active set. Upon receipt of the measurement report at the control node, the control node evaluates the measurements included in the measurement report, as indicated by action 12-2. The evaluation of action 12-2 includes several of the steps of Fig. 3. Among the included steps is step 3-1, involving acquisition of the signal strength measurement from the mobile station (MS) of the destination base station (the destination base station not being in the active set). In addition, action 12-2 includes step 3-3 through step 3-6 of Fig. 3, which involve a determination of handover probability (step 3-3) and computation of Expression 2 for the DynamicOffset (step 3-4) and computation of Expression 3 for the DynamicOffsetThreshold (step 3-5).

If is determined at step 3-6 (included in action 12-2) that the measured signal quality of the destination base station as received at the mobile station (MS) exceeds the DynamicOffsetThreshold, the preliminary handover routine of the control node is performed (step 3-7). The preliminary portion of the handover sequence is basically depicted as being within the upper dash-dotted line block of Fig. 12. Performance of the preliminary handover routine of the control node includes action 12-3 (uplink resource allocation) and action 12-4 (transmission of an uplink radio link setup request message from the control node to the destination base station), and (when the uplink radio link setup is successful) receipt of a UE detected message (action 12-8). Examples of the types of resources which are allocated include radio resources for traffic functions (e.g., codes, resources for handling of admission and congestion) and hardware resources (e.g., a receiver (RX)-card allocated for the user, [possibly] admission and congestion handling of shared resources [like processor usage, for example]).

Transmission of the uplink radio link setup request (action 12-4) from the control node to the destination base station primarily results in two basic actions occurring at the destination base station. These two basis actions comprise the preliminary portion of the handover sequence performed by the destination base station. A first such action is turning on a verification receiver at the destination base station to listen for the mobile station for which soft handover is anticipated (action 12-25). A second such action is performance of an uplink synchronization procedure between the mobile station and the destination base station (action 12-7). The uplink synchronization procedure involves receipt by the just-started receiver at the destination base station of a passive transmission from the mobile station (action 12-6). The uplink synchronization procedure includes measuring or determining the time position of the mobile station. Determination of the time position of the mobile station can be complex and time intensive, but in accordance with the present invention is performed at a non-critical occasion. Various aspects of uplink synchronization, and details of synchronization searchers for determining mobile station time position in general, can be gleaned from e.g. United States Patent 6,370,397, entitled "Search Window Delay Tracking In Code Division Multiple Access Communication System".

Assuming that the destination base station can achieve uplink synchronization relative to the mobile station, a MS detected message (e. g., UE detected message) is sent from the destination base station to the control node as action 12-8. At that point, the control node performs the flag and timer setting steps of step 3-8 and step 3-9 of Fig. 3.

Receipt of the uplink radio link setup request message of action 12-4 starts a timer in the destination base station. If the destination base station is unable (using the verification receiver started at action 12-5) to detect the mobile station before expiration of the timer the resources set up for the receiver and for mobile station are taken down. Such a timer can also be useful to take down the resources if the signal quality between the mobile station and the destination base station never exceeds the FixedOffsetThreshold of Expression 1 (e. g., if the mobile station changes direction or terminates the call before entering the destination cell).

The mobile station (MS) is determined to have actually entered the handover area for the destination cell when the measured signal quality from the destination base station as received at the mobile station (MS) exceeds the FixedOffsetThreshold of Expression 1. Fig. 12 shows, as action 12-9, transmission of a measurement report from the mobile station to the control node. The transmission of the measurement report of action 12-9 is subsequent to and separate from the transmission of the measurement report of action 12-1. As action 12-10, the measurement report is evaluated to determine if the handover sequence can be completed. The evaluation of action 12-10 of Fig. 12 involves step 3-1, step 3-2, and step 3-11 of Fig. 3. In particular, in the ensuing discussion it is now assumed that the measured signal strength of the signal quality of the destination base station as received at the mobile station (MS) exceeds the FixedOffsetThreshold of Expression 1 (see step 3-11) at the time of the report of the measurement report of action 12-9.

When the signal quality of the destination base station as received at the mobile station (MS) exceeds the FixedOffsetThreshold of Expression 1, the remainder portion of the handover sequence is performed. Since the preliminary portion of the handover sequence (above described) has been performed, the time position of the mobile station (MS) is already known due to the uplink L1 synchronization procedure of the preliminary portion of the handover sequence. Therefore, now that the time has come for the actual handover to be performed for the mobile station, the destination base station need not spend valuable time in the time-consuming task of performing L1 uplink synchronization.

The remaining portion of the handover sequence is basically depicted as being within the lower dash-dotted line block of Fig. 12. As action 12-11, downlink resources are allocated at the control node. Examples of such downlink resources include radio resources for traffic functions (e.g., codes, resources for handling of admission and congestion); hardware resources (a transmitter (TX) card allocated for the user, [possibly] admission and congestion handling of shared resources [like processor usage]); DL transmission resources (transport channel for user data is reserved). A downlink radio link setup request message is sent from the control node to the destination base station as action 12-12. Receipt of the downlink radio link setup request message at the destination base station results in the destination base station performing a radio link setup operation. The RL setup includes allocation and configuration of the necessary resources for the radio link; like an RX card. Radio connection supervision algorithms are also started in the base station. After the radio link is successfully set up, the destination base station sends a radio link setup response message to the control node as action 12-14.

Knowing that the radio link between the destination base station and the mobile station (MS) has been successfully set up, the control node sends an active set update message to the mobile station (MS) as action 12-15. The active set update message of action 12-15 essentially instructs the mobile station (MS) to include the destination base station in the active set, so that a leg of the connection can be established through the destination base station. Assuming that the destination base station employs AAL2 for the transmission of user data, the destination base station (as action 12-16) internally establishes an AAL2 connection through the destination base station to handle the new leg of the connection. For a destination base station which uses another type of protocol for the user data, another suitable type of connection is established in the base station. Action 12-17 is a message from the destination base station which confirms that the destination base station has, in fact, established its internal (e.g., AAL2) connection.

Upon the receipt of the first instance of user data (transmitted as action 12-18), the destination base station turns on a transmitter for the mobile station (MS) as action 12-19. When the transmitter has been turned on, the destination base station and the mobile station (MS) engage in a power ramping operation (action 12-20) which determines the power level at which the base station should transmit. When the appropriate transmit level has been determined for the base station, as action 12-21 a downlink synchronization procedure is performed between the destination base station and the mobile station (MS). When the downlink synchronization procedure has been successfully completed, the mobile station (MS) sends an active set update complete message (as action 12-22) to the control node. The destination base station sends a radio link restore indication to the control node as action 12-23.

Thus, as evident from the foregoing and Fig. 12 in particular, the present invention involves initiating at the destination base station the preliminary portion of the handover sequence for the specified mobile station, and then subsequently initiating at the destination base station another portion of a handover sequence (e.g., the remaining portion of the handover sequence) for the specified mobile station. The preliminary portion of the handover sequence involves an operation between the destination base station and the specified mobile station that is more time critical than operations performed during the remaining portion of the handover sequence. In particular, in the illustrated example, the preliminary portion of the handover sequence includes L1 uplink radio synchronization with respect to the specified mobile station

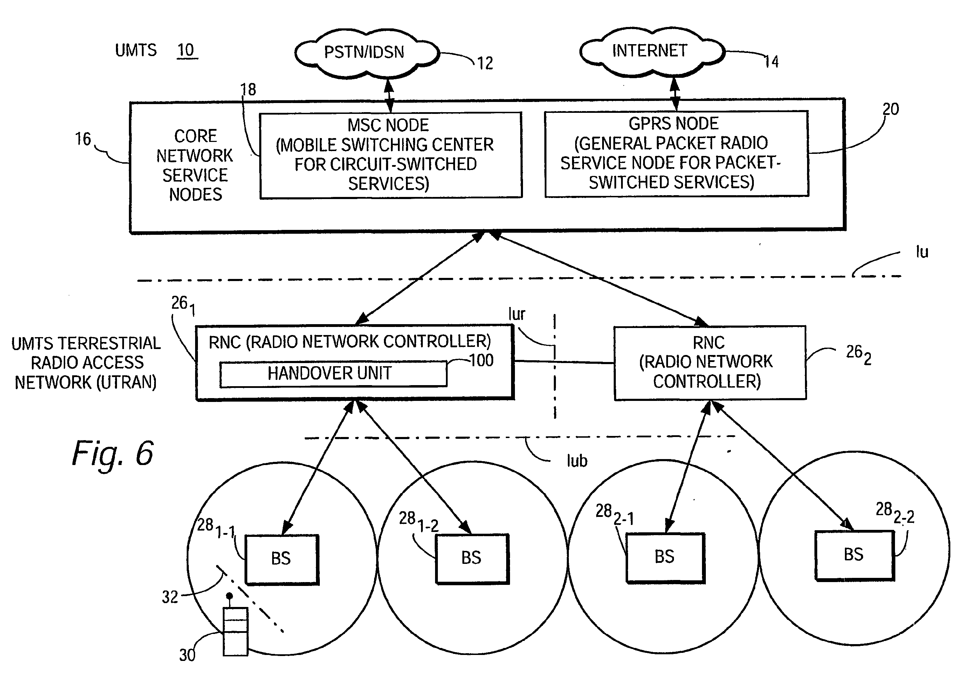

One non-limiting, example deployment of the present invention is described in the context of a universal mobile telecommunications (UMTS) 10 shown in Fig. 6. A representative, connection-oriented, external core network, shown as a cloud 12 may be for example the Public Switched Telephone Network (PSTN) and/or the Integrated Services Digital Network (ISDN). A representative, connectionless-oriented external core network shown as a cloud 14, may be for example the Internet. Both core networks are coupled to their corresponding service nodes 16. The PSTN/ISDN connection-oriented network 12 is connected to a connection-oriented service node shown as a Mobile Switching Center (MSC) node 18 that provides circuit-switched services. The Internet connectionless-oriented network 14 is connected to a General Packet Radio Service (GPRS) node 20 tailored to provide packet-switched type services which is sometimes referred to as the serving GPRS service node (SGSN).

Each of the core network service nodes 18 and 20 connects to a UMTS Terrestrial Radio Access Network (UTRAN) 24 over a radio access network (RAN) interface referred to as the Iu interface. UTRAN 24 includes one or more radio network controllers (RNCs) 26. For sake of simplicity, the UTRAN 24 of Fig. 6 is shown with only two RNC nodes, particularly RNC $26_1$ and RNC$26_2$. In Fig. 6, for sake of simplicity only one of the RNC nodes 26 is shown with a time position estimator 100 of the present invention. Each RNC 26 is connected to a plurality of base stations (BS) 28. For example, and again for sake of simplicity, two base station nodes are shown connected to each RNC 26. In this regard, RNC $26_1$ serves base station $28_{1-1}$ and base station $28_{1-2}$, while RNC $26_2$ serves base station $28_{2-1}$ and base station $28_{2-2}$. It will be appreciated that a different number of base stations can be served by each RNC, and that RNCs need not serve the same number of base stations. Moreover, Fig. 6 shows that an RNC can be connected over an Iur interface to one or more other RNCs in the URAN 24.

A mobile station (MS), such as mobile station (MS) 30 shown in Fig. 6, communicates with one or more base stations (BS) 28 over a radio or air interface 32. Each of the radio interface 32, the Iu interface, the Iub interface, and the Iur interface are shown by dash-dotted lines in Fig. 6.

Preferably, radio access is based upon wideband, Code Division Multiple Access (WCDMA) with individual radio channels allocated using CDMA spreading codes. Of course, other access methods may be employed. WCDMA provides wide bandwidth for multimedia services and other high transmission rate demands as well as robust features like diversity handoff and RAKE receivers to ensure high quality. Each user mobile station (MS) or equipment unit (UE) 30 is assigned its own scrambling code in order for a base station 28 to identify transmissions from that particular mobile station (MS) as well as for the mobile station (MS) to identify transmissions from the base station intended for that mobile station (MS) from all of the other transmissions and noise present in the same area.

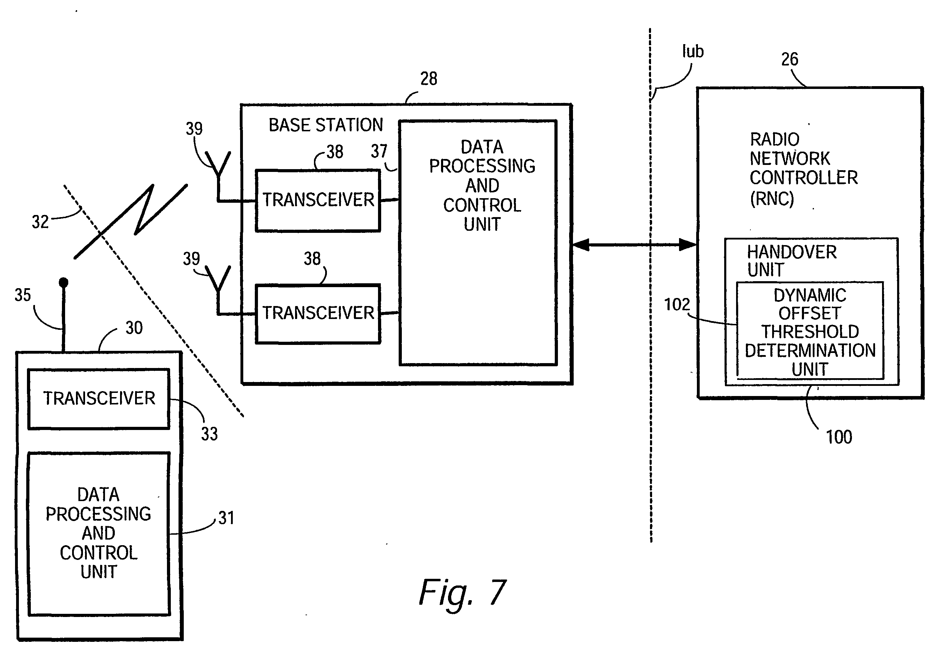

Fig. 7 shows selected general aspects of mobile station (MS) 30 and illustrative nodes such as radio network controller 26 and base station 28. The mobile station (MS) 30 shown in Fig. 7 includes a data processing and control unit 31 for controlling various operations required by the mobile station (MS). The data processing and control unit 31 of the mobile station (MS) provides control signals as well as data to a radio transceiver 33 connected to an antenna 35.

The example radio network controller 26 and base station 28 as shown in Fig. 7 are radio network nodes that each include a corresponding data processing and control unit 36 and 37, respectively, for performing numerous radio and data processing operations required to conduct communications between the RNC 26 and the user equipment units (UEs) 30. The data processing and control unit 36 of the RNC includes the diversity handover unit 100 of the present invention with its dynamic offset threshold determination unit 102. Part of the equipment controlled by the base station data processing and control unit 37 includes plural radio transceivers 38 connected to one or more antennas 39.

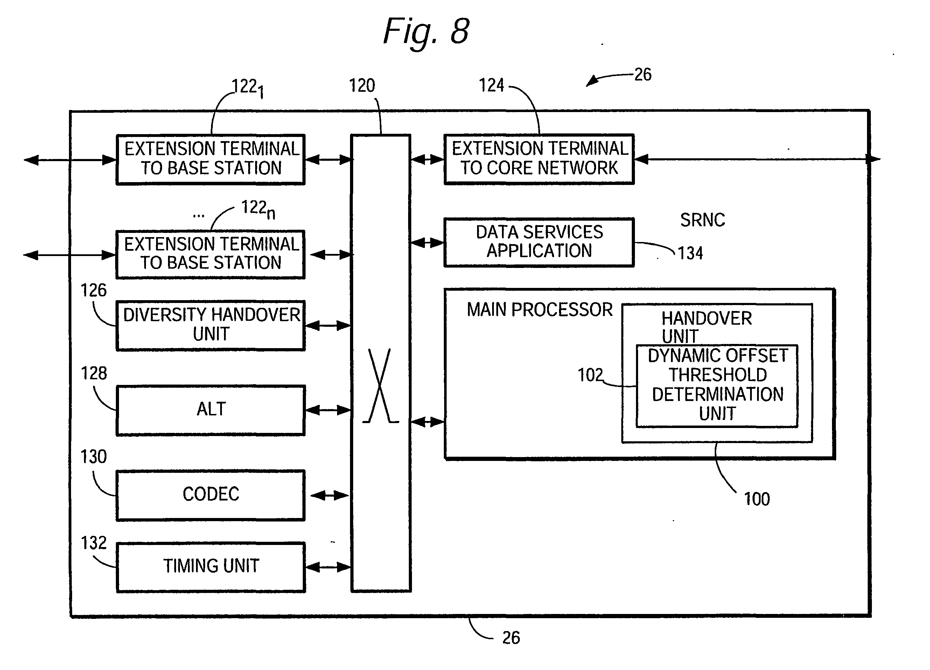

Fig. 8 illustrates, in somewhat more detail, an example non-limiting RNC node 26 of the present invention. It so happens that the RNC node 26 of Fig. 8 is a switched-based node having a switch 120. The switch 120 serves to interconnect other constituent elements of RNC node 26. Such other constituent elements include extension terminals $122_1$ through $122_n$, as well as extension terminal 124. Extension terminals $122_1$ through $122_n$ essentially function to connect RNC node 26 to the base stations 28 served by RNC node 26; extension terminal 124 connects RNC node 26 across the Iu interface to the core network.

Yet other constituent elements of RNC node 26 include diversity handover unit 126; an ALT unit 128; codex 130; timing unit 132; a data services application unit 134; and, a main processor 140. The person skilled in the art will appreciate generally the functions of these constituent elements, it being noted that the ALT unit 128 is a unit which provides, e.g., multiplexing and demultiplexing and (optionally) queuing with regard to differing protocols of cells. In one example implementation of the present invention, the diversity handover unit 100 with its dynamic offset threshold determination unit 102 is situated in the diversity handover unit 126. One ore more functions of dynamic offset threshold determination unit 102 can be delegated to main processor 140.

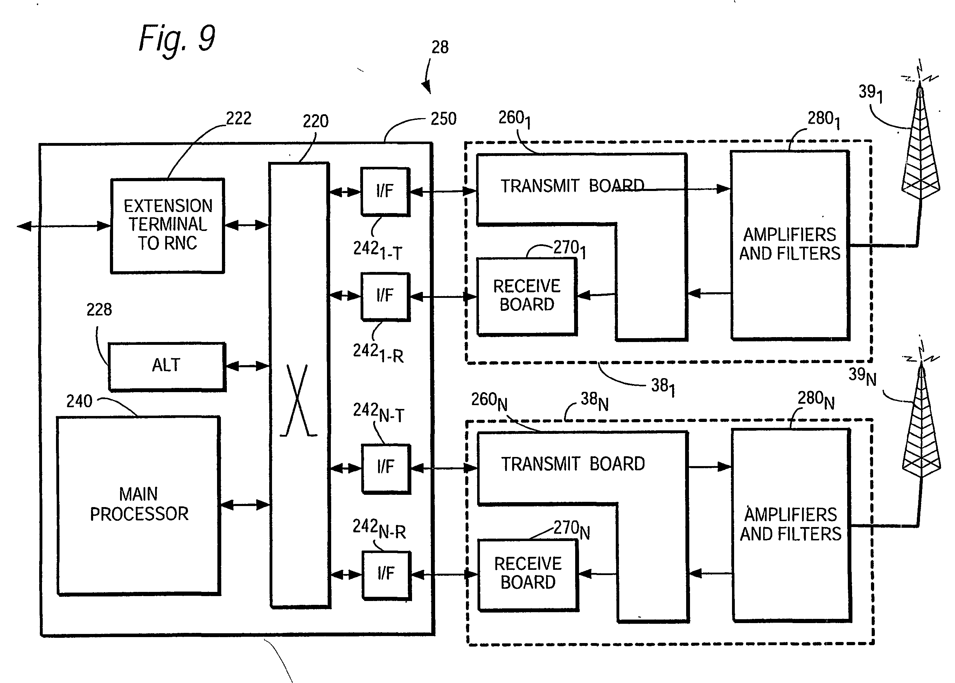

Fig. 9 illustrates, in non-limiting manner, more details of an example base station (BS) node 28 in accordance with one embodiment of the present invention. As with RNC node 26, the base station (BS) node 28 of Fig. 9 is a switched-based node having a switch 220 which serves to interconnect other constituent elements of base station (BS) node 28. Such other constituent elements include extension terminal 222; ALT unit 228; BS main processor 240, and interface boards 242.

Extension terminal 222 connects base station (BS) node 28 to radio network controller (RNC) node 26, and thus comprises the Iub interface. As in the case of radio network controller (RNC) node 26, the ALT unit 228 is a unit which provides, e.g., multiplexing and demultiplexing and (optionally) queuing with regard to differing protocols of cells.

During the preliminary portion the base station only receives data, and no transmission has to be made. The data is sent from receiver board to the main processor, for processing. When the UL synch is done, a message is sent to the RNC. Thus, antenna 39, amplifier and filters 280, receive board 270, interface 240, and extension terminal 222 are involved. The difference for the remainder of the handover sequence is that also transmissions are made to the MS, which means that transmit board 260 is also involved.

While the invention has been described in connection with what is presently considered to be the most practical and preferred embodiment, it is to be understood that the invention is not to be limited to the described embodiment, but on the contrary, is intended to cover various modifications and equivalent arrangements included within the scope of the appended claims.

**Claims**

1. A method of performing a handover in a telecommunications system having a source base station (BSS) and a destination base station (BSD), wherein a specified mobile station (MS) establishes a connection with the source base station, the method **characterized by**:

   upon receipt of a first measurement report from the specified mobile station,
   initiating at the destination base station a preliminary portion of a handover sequence for the specified mobile station, the preliminary portion of the handover sequence including uplink radio synchronization (12-7) with respect to the specified mobile station; and then subsequently upon receipt of a second measurement report from the specified mobile station,
   initiating at the destination base station another portion of the handover sequence for the specified mobile station.

2. The method of claim 1, wherein upon receipt of the first measurement report from the specified mobile station, a control node (CN) allocates uplink resources (12-3) for the specified mobile station to communicate with the destination base station.

3. The method of claim 1, wherein the first measurement report from the specified mobile station and the second measurement report from the specified mobile station include differing values of a signal quality measurement of a pilot signal from the destination base station as received by the specified mobile station.

4. The method of anyone of claims 1-3, wherein the preliminary portion of the handover sequence further comprises one or more of the following:

(a) sending an uplink setup request message (12-4) from a control node (CN) to the destination base station;
(b) turning on a receiver at the destination base station (12-5) to listen to the specified mobile station; and,
(c) sending a mobile station detected message (12-8) from the destination base station to the control node.

5. The method of anyone of claims 1-4, wherein the another portion of the handover sequence comprises remaining events of a conventional handover sequence which were not included in the preliminary portion of the handover sequence.

6. The method of anyone of claims 1 to 5, wherein the another portion of the handover sequence comprises one or more of the following:

(a) sending a downlink setup request message (12-12) from a control node (CN) to the destination base station;
(b) performing a radio link setup operation (12-13) at the destination base station for the specified mobile station;
(c) sending an active set update message (12-15) from the control node to the specified mobile station;
(d) establishing a user data transfer connection (12-16) between the control node and the destination base station;
(e) transferring user data (12-18) between the control node and the destination base station;
(f) turning on a transmitter (12-19) at the destination base station to transmit to the specified mobile station;
(g) performing a power ramping operation (12-20) between the destination base station and the specified mobile station;
(h) performing a downlink synchronization operation (12-21) between the destination base station and the specified mobile station;
(i) sending an active set update complete message (12-22) to the control node from the specified mobile station;
(j) sending a mobile station detected message from the specified mobile station to the destination base station; and
(k) sending a radio link restore indication message (12-23) from the destination base station to the control node.

7. A telecommunications system having a source base station (BSS) with a connection established with a specified mobile station (MS) and further comprising a control node (CN) and a destination base station(BSD), **characterized in that**:

the control node is adapted to initiate at the destination base station, upon receipt of a first measurement report from the specified mobile station, a preliminary portion of a handover sequence for the specified mobile station, and then subsequently
the control node is adapted to initiate at the destination base station, upon receipt of a second measurement report from the specified mobile station, another portion of the handover sequence for the specified mobile station; wherein the destination base station being comprises means for performing the preliminary portion of the handover sequence, adapted to perform uplink radio synchronization (12-7) with respect to the specified mobile station.

8. The system of claim 7, wherein upon receipt of the first measurement report from the specified mobile station, the control node is adapted to allocate uplink resources (12-3) for the specified mobile station to communicate with the destination base station.

9. The system of claim 7, wherein the first measurement report from the specified mobile station and the second measurement report from the specified mobile station include differing values of a signal quality measurement of a pilot signal from the destination base station as received by the specified mobile station.

10. The system of anyone of claims 7-9, wherein the means for performing the preliminary portion of the handover sequence further comprises one or more of the following:

(a) means for receiving at the destination base station an uplink setup request message (12-4) sent from the control node;

(b) means for turning on a receiver (12-5) at the destination base station to listen to the specified mobile station; and,

(c) means for sending a mobile station detected message (12-8) from the destination base station to the control node.

11. The system of anyone of claims 7-10, wherein the another portion of the handover sequence comprises remaining events of a conventional handover sequence which were not included in the preliminary portion of the handover sequence.

12. The system of anyone of claims 7-11, wherein means for performing the another portion of the handover sequence are provided, which comprises one or more of the following:

(a) means for receiving from the destination base station a downlink setup request message (12-12) sent from a control node;

(b) means for performing a radio link setup operation (12-13) at the destination base station for the specified mobile station;

(c) means for sending an active set update message (12-15) from the control node to the specified mobile station;

(d) means for establishing a user data transfer connection (12-16) between the control node and the destination base station;

(e) means for transferring user data (12-18) between the control node and the destination base station;

(f) means for turning on a transmitter (12-19) at the destination base station to transmit to the specified mobile station;

(g) means for performing a power ramping operation (12-20) between the destination base station and the specified mobile station;

(h) means for performing a downlink synchronization operation (12-21) between the destination base station and the specified mobile station;

(i) means for sending an active set update complete message (12-22) to the control node from the specified mobile station;

(j) means for sending a mobile station detected message from the specified mobile station to the destination base station; and

(k) means for sending a radio link restore indication message (12-23) from the destination base station to the control node.

13. The system of anyone of claims 7-12, wherein the control node is a radio network control (26) node of a radio access network.

**Patentansprüche**

1. Verfahren zum Ausführen eines Handovers in einem Telekommunikationssystem mit einer Quellbasisstation (BSS) und einer Zielbasisstation (BSD), worin eine spezifizierte Mobilstation (MS) eine Verbindung mit der Quellbasisstation aufbaut, wobei das Verfahren **gekennzeichnet ist durch**:

Das Auslösen an der Zielbasisstation eines einleitenden Teils des Handoverablaufs für die spezifizierte Mobilstation nach Empfang eines ersten Messberichts von der spezifizierten Mobilstation, wobei der einleitende Teil des Handoverablaufs Uplinkfunksynchronisierung (12-7) bezüglich der spezifizierten Mobilstation enthält; und dann anschließend nach Empfang eines zweiten Messberichts von der spezifizierten Mobilstation das Auslösen an der Zielbasisstation eines weiteren Teils des Handoverablaufs für die spezifizierte Mobilstation.

2. Verfahren nach Anspruch 1, worin nach Empfang des ersten Messberichts von der spezifizierten Mobilstation ein Steuerknoten (CN) Uplinkressourcen (12-3) für die spezifizierte Mobilstation zum Kommunizieren mit der Zielbasisstation zuordnet.

3. Verfahren nach Anspruch 1, worin der erste Messbericht von der spezifizierten Mobilstation und der zweite Messbericht von der spezifizierten Mobilstation unterschiedliche Werte einer Signalqualitätsmessung eines Pilotsignals von der Zielbasisstation enthalten, wie es von der spezifizierten Mobilstation empfangen wurde.

4. Verfahren nach einem der Ansprüche 1-3, worin der einleitende Teil des Handoverablaufs außerdem eins oder mehrere der Folgenden umfasst:

(a) Senden einer Uplinkaufbau-Anforderungsnachricht (12-4) von einem Steuerknoten (CN) an die Zielbasisstation;
(b) Einschalten eines Empfängers an der Zielbasisstation (12-5), um der spezifizierten Mobilstation zuzuhören; und
(c) Senden einer Nachricht "Mobilstation detektiert" (12-8) von der Zielbasisstation an den Steuerknoten.

5. Verfahren nach einem der Ansprüche 1-4, worin der weitere Teil des Handoverablaufs restliche Ereignisse eines herkömmlichen Handoverablaufs umfasst, die im einleitenden Teil des Handoverablaufs nicht enthalten waren.

6. Verfahren nach einem der Ansprüche 1-5, worin der weitere Teil des Handoverablaufs eins oder mehrere der Folgenden umfasst:

(a) Senden einer Downlinkaufbau-Anforderungsnachricht (12-12) von einem Steuerknoten (CN) an die Zielbasisstation;
(b) Ausführen einer Funkverbindungs-Aufbauoperation (12-13) an der Zielbasisstation für die spezifizierte Mobilstation;
(c) Senden einer Aktivmenge-Aktualisierungsnachricht (12-15) vom Steuerknoten an die spezifizierte Mobilstation;
(d) Aufbauen einer Benutzerdaten-Übertragungsverbindung (12-16) zwischen dem Steuerknoten und der Zielbasisstation;
(e) Übertragen von Benutzerdaten (12-18) zwischen dem Steuerknoten und der Zielbasisstation;
(f) Einschalten eines Senders (12-19) an der Zielbasisstation zum Senden an die spezifizierte Mobilstation;
(g) Ausführen einer Leistungsrampingoperation (12-20) zwischen der Zielbasisstation und der spezifizierten Mobilstation;
(h) Ausführen einer Downlinksynchronisieroperation (12-21) zwischen der Zielbasisstation und der spezifizierten Mobilstation;
(i) Senden einer Nachricht "Aktualisierung der Aktivmenge vollständig" (12-22) von der spezifizierten Mobilstation an den Steuerknoten;
(j) Senden einer Nachricht "Mobilstation detektiert" von der spezifizierten Mobilstation an die Zielbasisstation; und
(k) Senden einer Nachricht "Funkverbindungs-Wiederherstellungsanzeige" (12-23) von der Zielbasisstation an den Steuerknoten.

7. Telekommunikationssystem mit einer Quellbasisstation (BSS), die eine mit einer spezifizierten Mobilstation (MS) aufgebaute Verbindung hat, und außerdem einen Steuerknoten (CN) und eine Zielbasisstation (BSD) umfassend, **dadurch gekennzeichnet, dass**:

der Steuerknoten dazu angepasst ist, nach Empfang eines ersten Messberichts von der spezifizierten Mobilstation an der Zielbasisstation einen einleitenden Teil eines Handoverablaufs für die spezifizierte Mobilstation auszulösen, und dann anschließend
der Steuerknoten dazu angepasst ist, nach Empfang eines zweiten Messberichts von der spezifizierten Mobilstation an der Zielbasisstation einen weiteren Teil eines Handoverablaufs für die spezifizierte Mobilstation auszulösen;
worin die Zielbasisstation Mittel umfasst zum Ausführen des einleitenden Teils des Handoverablaufs, der dazu angepasst ist, Uplinkfunksynchronisierung (12-7) bezüglich der spezifizierten Mobilstation auszuführen.

8. System nach Anspruch 7, worin nach Empfang des ersten Messberichts von der spezifizierten Mobilstation der Steuerknoten dazu angepasst ist, Uplinkressourcen (12-3) für die spezifizierte Mobilstation zum Kommunizieren mit der Zielbasisstation zuzuordnen.

9. System nach Anspruch 7, worin der erste Messbericht von der spezifizierten Mobilstation und der zweite Messbericht von der spezifizierten Mobilstation unterschiedliche Werte einer Signalqualitätsmessung eines Pilotsignals von der Zielbasisstation enthalten, wie es von der spezifizierten Mobilstation empfangen wurde.

10. System nach einem der Ansprüche 7-9, worin das Mittel zum Ausführen des einleitenden Teils des Handoverablaufs außerdem eins oder mehrere der Folgenden enthält:

(a) Mittel zum Empfang an der Zielbasisstation einer vom Steuerknoten gesendeten Uplinkaufbau-Anforderungsnachricht (12-4);

(b) Mittel zum Einschalten eines Empfängers (12-5) an der Zielbasisstation, um der spezifizierten Mobilstation zuzuhören; und

(c) Mittel zum Senden einer Nachricht "Mobilstation detektiert" (12-8) von der Zielbasisstation zum Steuerknoten.

**11.** System nach einem der Ansprüche 7-10, worin der weitere Teil des Handoverablaufs restliche Ereignisse eines herkömmlichen Handoverablaufs umfasst, die im einleitenden Teil des Handoverablaufs nicht enthalten waren.

**12.** System nach einem der Ansprüche 7-11, worin Mittel zum Ausführen des weiteren Teils des Handoverablaufs bereitgestellt werden, der eins oder mehrere der Folgenden umfasst:

(a) Mittel zum Empfangen von der Zielbasisstation einer von einem Steuerknoten gesendeten Downlinkaufbau-Anforderungsnachricht (12-12);

(b) Mittel zum Ausführen einer Funkverbindungs-Aufbauoperation (12-13) an der Zielbasisstation für die spezifizierte Mobilstation;

(c) Mittel zum Senden einer Aktivmenge-Aktualisierungsnachricht (12-15) vom Steuerknoten an die spezifizierte Mobilstation;

(d) Mittel zum Aufbauen einer Benutzerdaten-Übertragungsverbindung (12-16) zwischen dem Steuerknoten und der Zielbasisstation;

(e) Mittel zum Übertragen von Benutzerdaten (12-18) zwischen dem Steuerknoten und der Zielbasisstation;

(f) Mittel zum Einschalten eines Senders (12-19) an der Zielbasisstation zum Senden an die spezifizierte Mobilstation;

(g) Mittel zum Ausführen einer Leistungsrampingoperation (12-20) zwischen der Zielbasisstation und der spezifizierten Mobilstation;

(h) Mittel zum Ausführen einer Downlinksynchronisieroperation (12-21) zwischen der Zielbasisstation und der spezifizierten Mobilstation;

(i) Mittel zum Senden einer Nachricht "Aktualisierung der Aktivmenge vollständig" (12-22) von der spezifizierten Mobilstation an den Steuerknoten;

(j) Mittel zum Senden einer Nachricht "Mobilstation detektiert" von der spezifizierten Mobilstation an die Zielbasisstation; und

(k) Mittel zum Senden einer Nachricht "Funkverbindungs-Wiederherstellungsanzeige" (12-23) von der Zielbasisstation an den Steuerknoten.

**13.** System nach einem der Ansprüche 7-12, worin der Steuerknoten ein Funknetz-Steuerknoten (26) eines Funkzugriffsnetzes ist.

**Revendications**

**1.** Procédé pour effectuer un transfert dans un système de communication ayant une station de base source (BSS) et une station de base de destination (BSD), dans lequel une station mobile (MS) spécifiée établit une connexion avec la station de base source, le procédé étant **caractérisé par** les étapes consistant à :

après la réception d'un premier rapport de mesure issu de la station mobile spécifiée, initier au niveau de la station de base de destination une partie préliminaire d'une séquence de transfert pour la station mobile spécifiée, la partie préliminaire de la séquence de transfert englobant une synchronisation radio de liaison montante (12-7) par rapport à la station mobile spécifiée ; puis, ensuite, à la réception d'un second rapport de mesure issu de la station mobile spécifiée, initier au niveau de la station de base de destination une autre partie de la séquence de transfert pour la station mobile spécifiée.

**2.** Procédé selon la revendication 1, dans lequel après la réception du premier rapport de mesure issu de la station mobile spécifiée, un noeud de commande (CN) alloue des ressources de liaison montante (12-3) pour la station mobile spécifiée pour communiquer avec la station de base de destination.

**3.** Procédé selon la revendication 1, dans lequel le premier rapport de mesure issu de la station mobile spécifiée et le second rapport de mesure issu de la station mobile spécifiée englobent des valeurs différentes d'une mesure de qualité du signal d'un signal pilote issu de la station de base de destination tel que reçu par la station mobile spécifiée.

**4.** Procédé selon l'une quelconque des revendications 1 à 3, dans lequel la partie préliminaire de la séquence de transfert comprend en outre une ou plusieurs des étapes suivantes consistant à :

a) envoyer un message de demande d'établissement de liaison montante (12-4) depuis un noeud de commande (CN) vers la station de base de destination ;
b) allumer un récepteur au niveau de la station de base de destination (12-5) pour écouter la station mobile spécifiée, et
c) envoyer un message de station mobile détectée (12-8) depuis la station de base de destination vers le noeud de commande.

**5.** Procédé selon l'une quelconque des revendications 1 à 4, dans lequel l'autre partie de la séquence de transfert comprend des évènements restants d'une séquence de transfert conventionnelle qui n'ont pas été inclus dans la partie préliminaire de la séquence de transfert.

**6.** Procédé selon l'une quelconque des revendications 1 à 5, dans lequel l'autre partie de la séquence de transfert comprend une ou plusieurs des étapes suivantes consistant à :

a) envoyer un message de demande d'établissement de liaison descendante (12-12) depuis un noeud de commande (CN) vers la station de base de destination ;
b) effectuer une opération d'établissement de liaison radio (12-13) au niveau de la station de base de destination pour la station mobile spécifiée ;
c) envoyer un message de mise à jour d'ensemble actif (12-15) depuis le noeud de commande vers la station mobile spécifiée ;
d) établir une connexion de transfert de données d'utilisateur (12-16) entre le noeud de commande et la station de base de destination ;
e) transférer des données d'utilisateur (12-18) entre le noeud de commande et la station de basev de destination ;
f) allumer un émetteur (12-19) au niveau de la station de base de destination pour transmettre vers la station mobile spécifiée ;
g) effectuer une opération de ramping de puissance (12-20) entre la station de base de destination et la station mobile spécifiée ;
h) effectuer une opération de synchronisation de liaison descendante (12-21) entre la station de base de destination et la station mobile spécifiée ;
i) envoyer un message d'achèvement de mise à jour d'ensemble actif (12-22) au noeud de commande depuis la station mobile spécifiée ;
j) envoyer un message de station mobile détectée depuis la station mobile spécifiée vers la station de base de destination ; et
k) envoyer un message d'indication de restauration de liaison radio (12-23) depuis la station de base de destination vers le noeud de commande.

**7.** Système de télécommunication ayant une station de base source (BSS) avec une connexion établie avec une station mobile spécifiée (MS) et comprenant en outre un noeud de commande (CN) et une station de base de destination (BSD), **caractérisé en ce que** :

le noeud de commande est adapté pour initier, au niveau de la station de base de destination, après la réception d'un premier rapport de mesure issu de la station mobile spécifiée, une partie préliminaire d'une séquence de transfert pour la station mobile spécifiée ; puis, ensuite,
le noeud de commande est adapté pour initier, au niveau de la station de base de destination, après la réception d'un second rapport de mesure issu de la station mobile spécifiée, une autre partie de la séquence de transfert pour la station mobile spécifiée ;
dans lequel la station de base de destination comprend un moyen pour exécuter la partie préliminaire de la séquence de transfert étant adapté pour effectuer une synchronisation radio de liaison montante (12-7) par rapport à la station mobile spécifiée.

**8.** Système selon la revendication 7, dans lequel après la réception du premier rapport de mesure issu de la station mobile spécifiée, le noeud de commande est adapté pour allouer des ressources de liaison montante (12-3) pour la station mobile spécifiée pour communiquer avec la station de base de destination.

**9.** Système selon la revendication 7, dans lequel le premier rapport de mesure issu de la station mobile spécifiée et le second rapport de mesure issu de la station mobile spécifiée englobent des valeurs différentes d'une mesure de qualité du signal d'un signal pilote issu de la station de base de destination, tel que reçu par la station mobile spécifiée.

10. Système selon l'une quelconque des revendications 7 à 9, dans lequel le moyen pour exécuter la partie préliminaire de la séquence de transfert comprend en outre un ou plusieurs des moyens suivants :

    a) un moyen pour recevoir, au niveau de la station de base de destination, un message de demande d'établissement de liaison montante (12-4) envoyé depuis le noeud de commande ;
    b) un moyen pour allumer un récepteur (12-5) au niveau de la station de base de destination pour écouter la station mobile spécifiée, et
    c) un moyen pour envoyer un message de station mobile détectée (12-8) depuis la station de base de destination vers le noeud de commande.

11. Système selon l'une quelconque des revendications 7 à 10, dans lequel l'autre partie de la séquence de transfert comprend des événements restants d'une séquence de transfert conventionnelle qui n'ont pas été inclus dans la partie préliminaire de la séquence de transfert.

12. Système selon l'une quelconque des revendications 7 à 11, dans lequel des moyens pour exécuter l'autre partie de la séquence de transfert sont fournis, lesquels comprennent un ou plusieurs des moyens suivants :

    a) un moyen pour recevoir depuis la station de base de destination un message de demande d'établissement de liaison descendante (12-12) envoyé depuis un noeud de commande ;
    b) un moyen pour effectuer une opération d'établissement de liaison radio (12-13) au niveau de la station de base de destination pour la station mobile spécifiée ;
    c) un moyen pour envoyer un message de mise à jour d'ensemble actif (12-15) depuis le noeud de commande vers la station mobile spécifiée ;
    d) un moyen pour établir une connexion de transfert de données d'utilisateur (12-16) entre le noeud de commande et la station de base de destination ;
    e) un moyen pour transférer des données d'utilisateur (12-18) entre le noeud de commande et la station de base de destination ;
    f) un moyen pour allumer un émetteur (12-19) au niveau de la station de base de destination pour transmettre vers la station mobile spécifiée ;
    g) un moyen pour effectuer une opération de ramping de puissance (12-20) entre la station de base de destination et la station mobile spécifiée ;
    h) un moyen pour effectuer une opération de synchronisation de liaison descendante (12-21) entre la station de base de destination et la station mobile spécifiée ;
    i) un moyen pour envoyer un message d'achèvement de mise à jour d'ensemble actif (12-22) au noeud de commande depuis la station mobile spécifiée ;
    j) un moyen pour envoyer un message de station mobile détectée depuis la station mobile spécifiée vers la station de base de destination ; et
    k) un moyen pour envoyer un message d'indication de restauration de liaison radio (12-23) depuis la station de base de destination vers le noeud de commande.

13. Système selon l'une quelconque des revendications 7 à 12, dans lequel le noeud de commande est un noeud de commande de réseau radio (26) d'un réseau d'accès radio.

*Fig. 1A*

CN

CONTROL NODE (CN)
HANDOVER UNIT — 100
DYNAMIC OFFSET THRESHOLD DETERMINATION UNIT — 102

CELL $C_1$

CELL $C_2$

$BS_S$

BASE STATION

$BS_D$

BASE STATION

$Iua_1$

$CL_1$

D

MS

DynamicOffsetThreshold$_2$

FixedOffsetThreshold$_2$

EP 1 340 398 B1

*Fig. 1B*

CONTROL NODE (CN)

HANDOVER UNIT — 100

DYNAMIC OFFSET THRESHOLD DETERMINATION UNIT — 102

CN

PRELIMINARY HANDOVER INITIATION MESSAGE

CELL $C_1$

CELL $C_2$

110

$BS_S$

$BS_D$

BASE STATION

BASE STATION

$Iua_1$

D

$CL_1$

PRELIMINARY HANDOVER SEQUENCE

MS

DynamicOffsetThreshold$_2$

FixedOffsetThreshold$_2$

EP 1 340 398 B1

Fig. 1C

CONTROL NODE (CN) — 100

HANDOVER UNIT

DYNAMIC OFFSET THRESHOLD DETERMINATION UNIT — 102

CN

MAIN HANDOVER INITIATION MESSAGE

CELL $C_1$

CELL $C_2$

$BS_S$

BASE STATION

$Iua_1$

D

$CL_1$

MS

$BS_D$

BASE STATION

MAIN HANDOVER SEQUENCE

112

DynamicOffsetThreshold$_2$

FixedOffsetThreshold$_2$

EP 1 340 398 B1

Fig. 1D

CONTROL NODE (CN)

HANDOVER UNIT

DYNAMIC OFFSET THRESHOLD DETERMINATION UNIT

CN

100

102

CELL $C_1$

CELL $C_2$

$BS_S$

BASE STATION

$BS_D$

BASE STATION

$Iua_1$

$CL_2$

D

$CL_1$

$Iua_2$

MS

DynamicOffsetThreshold$_2$

FixedOffsetThreshold$_2$

EP 1 340 398 B1

SIGNAL QUALITY

*Fig. 2*

SOURCE BASE STATION ——————

DESTINATION BASE STATION - - - - - - -

TIME

EP 1 340 398 B1

Fig. 3

**Fig. 4**

CONTROL NODE (CN) — 100
HANDOVER UNIT
DYNAMIC OFFSET THRESHOLD DETERMINATION UNIT — 102

CN

CELL $C_1$  CELL $C_2$  CELL $C_3$

$BS_{s1}$  BASE STATION

$BS_D$  BASE STATION

BASE STATION

$D_1$

$D_2$

$MS_1$  $MS_2$

DynamicOffsetThreshold $_{2-1}$  FixedOffsetThreshold $_2$  DynamicOffsetThreshold $_{2-2}$

EP 1 340 398 B1

Fig. 5A

PROBABILITY

CASE 1 (MS$_1$) ————————

CASE 2 (MS$_2$) - - - - - - - - -

RELATIONSHIP OF SIGNAL QUALITIES

EP 1 340 398 B1

Fig. 5B

SIGNAL QUALITY

SOURCE CELL

DESTINATION CELL

FIXED OFFSET THRESHOLD

DYNAMIC OFFSET THRESHOLD
(CASE 2)

DYNAMIC OFFSET THRESHOLD
(CASE 1)

TIME

PRELIMINARY HANDOVER
SEQUENCE STARTED
(CASE 1)

PRELIMINARY HANDOVER
SEQUENCE STARTED
(CASE 2)

EP 1 340 398 B1

UMTS  10

PSTN/IDSN ~12

INTERNET ~14

18

16 CORE NETWORK SERVICE NODES

MSC NODE (MOBILE SWITCHING CENTER FOR CIRCUIT-SWITCHED SERVICES)

GPRS NODE (GENERAL PACKET RADIO SERVICE NODE FOR PACKET-SWITCHED SERVICES) 20

lu

UMTS TERRESTRIAL RADIO ACCESS NETWORK (UTRAN)

$26_1$

RNC (RADIO NETWORK CONTROLLER)

HANDOVER UNIT ~100

lur

RNC (RADIO NETWORK CONTROLLER) $26_2$

Fig. 6

lub

$28_{1-1}$ BS

$28_{1-2}$ BS

$28_{2-1}$ BS

$28_{2-2}$ BS

32

30

EP 1 340 398 B1

Fig. 7

# Fig. 8

EP 1 340 398 B1

*Fig. 9*

AMPLIFIERS AND FILTERS $280_1$

TRANSMIT BOARD $260_1$

RECEIVE BOARD $270_1$

$39_1$

$38_1$

AMPLIFIERS AND FILTERS $280_N$

TRANSMIT BOARD $260_N$

RECEIVE BOARD $270_N$

$39_N$

$38_N$

$28$

$250$

I/F $242_{1-T}$

I/F $242_{1-R}$

I/F $242_{N-T}$

I/F $242_{N-R}$

X $220$

EXTENSION TERMINAL TO RNC $222$

ALT $228$

MAIN PROCESSOR $240$

## Fig. 10

EVENT-TRIGGERED MEASUREMENT REPORTS

| PERIODIC MEASUREMENT REPORT | |

TIME →

EVENT-TRIGGERED MEASUREMENT REPORTS

| PERIODIC MEASUREMENT REPORT | |

EP 1 340 398 B1

DynamicOffsetThreshold

FixedOffsetThreshold

$BS_S$

CELL $C_1$

$D_1$

$MS_1$

CELL $C_2$

$BS_D$

COST

TIME TO COMPLETE
HANDOVER

TIME TO COMPLETE
HANDOVER

TIME

*Fig. 11*

EP 1 340 398 B1

## Fig. 12

MOBILE
STATION

DESTINATION
BASE
STATION

CONTROL
NODE

12-1: MEASUREMENT
REPORT

12-2: MEASUREMENT
EVALUATION

PRELIMINARY
HANDOVER
SEQUENCE

12-3: UL RESOURCE
ALLOCATION

12-4: UL RADIO LINK
SETUP REQUEST

12-6: PASSIVE
TRANSMISSION

RX ON 12-5

TIMER

UL SYNCH 12-7

12-8: MS
DETECTED

12-9: MEASUREMENT
REPORT

12-10: HANDOVER
EVALUATION

REMAINDER
OF
HANDOVER
SEQUENCE

12-11: DL RESOURCE
ALLOCATION

12-12: DL RADIO LINK
SETUP REQUEST

12-13

RADIO LINK
SETUP

12-14: RADIO LINK
SETUP RESPONSE

12-15: ACTIVE
SET
UPDATE

ESTABLISH
AAL2 CONNECTION 12-16

12-17

USER DATA TRANSFER

12-18

12-20: POWER
RAMPING

TX ON 12-19

DL
SYNC 12-21

12-22: ACTIVE SET
UPDATE COMPLETE

12-23: RADIO LINK
RESTORE INDICATION

**EP 1 340 398 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6052598 A
- US 5530912 A
- US 5408517 A
- EP 0845877 A
- WO 0141482 A
- US 6370397 B